# EUROPÄISCHE PATENTANMELDUNG

(11) **EP 3 970 951 A1**
(43) Veröffentlichungstag der Anmeldung: **23.03.2022**
(21) Anmeldenummer: 21206840.7
(22) Anmeldetag: 27.02.2017
(51) Int. Cl.: B29C 64/153, B29C 64/268, B33Y 10/00, B33Y 30/00, B22F 10/20, B22F 12/00

(54) **VORRICHTUNG ZUR ADDITIVEN HERSTELLUNG EINES DREIDIMENSIONALEN OBJEKTS**

(30) Priorität: 18.03.2016 DE 102016105097
(62) Teilanmeldung aus: 17707549.6
(71) Anmelder: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB

(57) **Zusammenfassung**

Vorrichtung (1) zur additiven Herstellung eines dreidimensionalen Objekts durch sukzessive schichtweise selektive Belichtung und damit einhergehende selektive Verfestigung von in einer Bauebene (10) ausgebildeten Baumaterialschichten (9) aus verfestigbarem Baumaterial (2) vermittels wenigstens eines Energiestahls (3).

## Beschreibung

Die Erfindung betrifft eine Vorrichtung zur additiven Herstellung eines dreidimensionalen Objekts durch sukzessive schichtweise selektive Belichtung und damit einhergehende selektive Verfestigung von in einer Bauebene ausgebildeten Baumaterialschichten aus verfestigbarem Baumaterial vermittels wenigstens eines Energiestahls.

Derartige Vorrichtungen zur additiven bzw. generativen Herstellung dreidimensionaler Objekte sind an und für sich bekannt. Vermittels entsprechenden Vorrichtungen werden herzustellende dreidimensionale Objekte durch sukzessive schichtweise selektive Belichtung und damit einhergehende Verfestigung von sukzessive in einer Bauebene aufgebrachten Baumaterialschichten aus verfestigbarem Baumaterial in jeweiligen Querschnittsbereichen der jeweils herzustellenden Objekte entsprechenden Bereichen vermittels eines Energiestrahls additiv bzw. generativ aufgebaut.

Bekannte Vorrichtungen bedingen aufgrund ihres konstruktiven Aufbaus eine getrennte Durchführung von Beschichtungs- und Belichtungsvorgängen; mithin werden Beschichtungs- und Belichtungsvorgänge zeitlich getrennt voneinander durchgeführt. Hierzu zählen beispielsweise Vorrichtungen mit einer, gegebenenfalls beweglich gelagerten, Belichtungseinrichtung und einer dazu in horizontaler Richtung lagefest angeordneten Trägereinrichtung, welche ein die Bauebene umfassendes Trägerelement umfasst. Diese Vorrichtungen sind im Hinblick auf eine Reduzierung von Nebenzeiten bzw. eine Optimierung der Bauzeit weiterentwicklungsbedürftig.

Der Erfindung liegt die Aufgabe zugrunde, eine demgegenüber, insbesondere im Hinblick auf die Reduzierung von Nebenzeiten bzw. eine Optimierung der Bauzeit, verbesserte Vorrichtung zur additiven Herstellung eines dreidimensionalen Objekts anzugeben.

Die Aufgabe wird durch eine Vorrichtung gemäß Anspruch 1 gelöst. Die abhängigen Ansprüche betreffen besondere Ausführungsformen der Vorrichtung.

Die hierin beschriebene Vorrichtung dient der additiven bzw. generativen Herstellung wenigstens eines dreidimensionalen Objekts, d. h. beispielsweise eines technischen Bauteils bzw. einer technischen Bauteilgruppe, durch sukzessive schichtweise selektive Belichtung und damit einhergehende selektive Verfestigung einzelner Baumaterialschichten aus einem verfestigbaren Baumaterial vermittels wenigstens eines Energiestrahls.

Bei dem verfestigbaren Baumaterial kann es sich um ein Metall-, Kunststoff- und/oder Keramikpulver handeln. Unter einem Metall-, Kunststoff- oder Keramikpulver kann jeweils auch ein Pulvergemisch unterschiedlicher Metalle, Kunststoffe oder Keramiken verstanden werden. Für ein Metallpulver gilt insofern, dass es sich hierbei auch um ein Pulver aus wenigstens einer Metalllegierung handeln kann. Bei dem Energiestrahl kann es sich um einen Laserstrahl handeln. Bei der Vorrichtung kann es sich entsprechend um eine Vorrichtung zur Durchführung selektiver Laserschmelzverfahren (kurz SLM-Verfahren) oder selektiver Lasersinterverfahren (kurz SLS-Verfahren) handeln.

Die sukzessive schichtweise selektive Belichtung und die damit einhergehende sukzessive schichtweise selektive Verfestigung der zur Herstellung eines dreidimensionalen Objekts (im Weiteren abgekürzt als "Objekt" bezeichnet) zu verfestigenden Baumaterialschichten erfolgt auf Grundlage von objektbezogenen Baudaten. Die Baudaten beschreiben die geometrische bzw. geometrischkonstruktive Gestalt des herzustellenden Objekts. Bei den Baudaten kann es sich z. B. um CAD-Daten des herzustellenden Objekts handeln bzw. können die Baudaten solche beinhalten.

Die Vorrichtung umfasst sämtliche zur Durchführung additiver Bauprozesse typischerweise erforderlichen Funktionskomponenten. Die Funktionskomponenten sind typischerweise in einer, gegebenenfalls auch als Maschinengehäuse zu bezeichnenden bzw. zu erachtenden, Gehäusestruktur der Vorrichtung anordenbar bzw. angeordnet.

Die Vorrichtung umfasst wenigstens eine kombinierte Beschichtungs- und Belichtungsbaugruppe (im Weiteren abgekürzt als "Baugruppe" bezeichnet). Die Baugruppe umfasst eine Beschichtungseinrichtung. Die Beschichtungseinrichtung ist zur Durchführung von Materialaufbringungsvorgängen zur Aufbringung von Baumaterial auf die Bauebene und zur Durchführung von Beschichtungsvorgängen zur Ausbildung von selektiv zu belichtenden bzw. selektiv zu verfestigenden Baumaterialschichten in einer Bauebene eingerichtet. In einem jeweiligen Aufbringungsvorgang wird eine bestimmte Menge an Baumaterial auf die Bauebene aufgebracht. In einem jeweiligen Beschichtungsvorgang wird typischerweise aus im Rahmen eines Aufbringungsvorgangs auf die Bauebene aufgebrachten Baumaterials eine selektiv zu belichtende bzw. selektiv zu verfestigende Baumaterialschicht definierter Schichtdicke ausgebildet. Die Beschichtungseinrichtung umfasst wenigstens ein typischerweise oberhalb der Bauebene angeordnetes, insbesondere wenigstens eine Aufbringungsöffnung, welche typischerweise über ein zwischen einer Offen- und Schließstellung bewegbares Schließelement verschließbar ist, umfassendes, Aufbringungselement zur Aufbringung von Baumaterial auf die Bauebene und wenigstens ein typischerweise oberhalb der Bauebene angeordnetes, insbesondere klingenartiges bzw. -förmiges, Beschichtungselement ("Beschichterklinge") zur Ausbildung einer selektiv zu belichtende bzw. selektiv zu verfestigende Baumaterialschicht definierter Schichtdicke.

Neben der Beschichtungseinrichtung umfasst die Baugruppe eine Belichtungseinrichtung. Die Belichtungseinrichtung ist zur Durchführung von Belichtungsvorgängen zur selektiven Belichtung und damit einhergehenden selektiven Verfestigung von vermittels der Beschichtungseinrichtung in der Bauebene ausgebildeten Baumaterialschichten eingerichtet. In einem jeweiligen Belichtungsvorgang wird typischerweise eine vermittels der Beschichtungseinrichtung ausgebildete Baumaterialschicht selektiv belichtet und damit selektiv verfestigt. Die Belichtungseinrichtung kann ein oder mehrere, typischerweise oberhalb der Bauebene angeordnete, Belichtungselement(e) umfassen. Bei einem Belichtungselement kann es sich um ein Laserdiodenelement oder um ein mit einem Laserdiodenelement koppelbares oder gekoppeltes, insbesondere linsenförmiges, optisches Element oder um ein Scannerelement als Teil einer auch als Strahlablenkeinrichtung zu bezeichnenden bzw. zu erachtenden optischen Scannereinrichtung handeln bzw. kann ein entsprechendes Belichtungselement wenigstens eines der genannten Elemente umfassen. Aufgrund der, gegebenenfalls variierbaren, Strahleigenschaften der damit erzeugbaren Laserstrahlen können Belichtungselemente in Form von Laserdiodenelementen besonders zweckmäßig sein. Wie sich im Weiteren ergibt, können Laserdiodenelemente, gegebenenfalls in Gruppen zusammengefasst, reihen- und/oder spaltenartig ("matrixartig") angeordnet sein.

Die Baugruppe ist lage- bzw. ortsfest, d. h. nicht bewegbar, an der vorrichtungsseitigen Gehäusestruktur angeordnet oder ausgebildet. Die lagefest an der vorrichtungsseitigen Gehäusestruktur angeordnete bzw. ausgebildete Baugruppe bzw. die dieser zugehörige Beschichtungseinrichtung und Belichtungseinrichtung befindet sich daher in einer definierten Position, d. h. insbesondere in einem definierten Abstand, und einer definierten Ausrichtung relativ zu der Bauebene. Die lagefeste Anordnung bzw. Ausbildung der Baugruppe schließt nicht aus, dass die Baugruppe, z. B. zu Service- und/oder Reparaturzwecken, bedarfsweise von der Gehäusestruktur gelöst werden kann. Die Baugruppe kann sonach lösbar an der Gehäusestruktur befestigbar sein, wobei die Baugruppe in dem an der Gehäusestruktur befestigten Zustand lagefest, d. h. nicht bewegbar, relativ zu der Bauebene, gelagert ist.

Die Vorrichtung umfasst weiterhin wenigstens eine Trägereinrichtung. Die Trägereinrichtung umfasst wenigstens ein die Bauebene, d. h. die Ebene, in welcher entsprechende Beschichtungs- und Belichtungsvorgänge durchgeführt werden, umfassendes Trägerelement. Das typischerweise eine plattenartige bzw. -förmige geometrische Gestalt aufweisende Trägerelement ist in einer horizontal ausgerichteten Bewegungsebene bzw. -bahn relativ zu der Baugruppe bewegbar gelagert. Bei jeweiligen Bewegungen des Trägerelements in der horizontal ausgerichteten Bewegungsebene bzw. -bahn handelt es sich typischerweise um Linearbewegungen entlang einer linearen Bewegungsachse (Translationsachse).

Zur Realisierung jeweiliger Bewegungen des Trägerelements in der horizontal ausgerichteten Bewegungsebene relativ zu der Baugruppe sind grundsätzlich unterschiedliche Varianten möglich.

In erster Variante kann das Trägerelement an oder in einer bewegbar gelagerten, modulartigen Gehäusestruktur der Trägereinrichtung angeordnet oder ausgebildet sein. In der ersten Variante ist die modulartige Gehäusestruktur in der horizontal ausgerichteten Bewegungsebene relativ zu der Baugruppe bewegbar gelagert. Hier ist also nicht das Trägerelement selbst, sondern die gesamte modulartige Gehäusestruktur an oder in welcher das Trägerelement angeordnet oder ausgebildet ist, in horizontaler Richtung relativ zu der Baugruppe bewegbar gelagert. Bewegungen des Trägerelements relativ zu der Baugruppe ergeben sich sonach durch Bewegungen der modulartigen Gehäusestruktur relativ zu der Baugruppe. Das Trägerelement ist zumindest in horizontaler Richtung lagefest an oder in der modulartigen Gehäusestruktur angeordnet oder ausgebildet.

In einer weiteren Variante kann das Trägerelement in einer lagefest relativ zu der Baugruppe angeordneten oder ausgebildeten, modulartigen Gehäusestruktur der Trägereinrichtung angeordnet oder ausgebildet sein. In der weiteren Variante ist das Trägerelement an oder in der Gehäusestruktur in der horizontal ausgerichteten Bewegungsebene relativ zu der Baugruppe bewegbar gelagert. Hier ist also das Trägerelement selbst in horizontaler Richtung relativ zu der Baugruppe bewegbar gelagert. Bewegungen des Trägerelements relativ zu der Baugruppe ergeben sich sonach durch tatsächliche Bewegungen des Trägerelements relativ zu der modulartigen Gehäusestruktur. Die modulartige Gehäusestruktur ist zumindest in horizontaler Richtung lagefest an oder in der vorrichtungsseitigen Gehäusestruktur angeordnet oder ausgebildet.

Prinzipiell ist auch eine Kombination der beiden vorstehend genannten Varianten möglich.

Grundsätzlich gilt, dass die modulartige Gehäusestruktur der Trägereinrichtung nach Art eines Wechselbehälters aus der vorrichtungsseitigen Gehäusestruktur entnehmbar ist. Die Trägereinrichtung lässt sich sonach bedarfsweise aus der vorrichtungsseitigen Gehäusestruktur entnehmen und bedarfsweise an der vorrichtungsseitigen Gehäusestruktur befestigen.

Zum Antrieb, d. h. zur Versetzung des Trägerelements oder der modulartigen Gehäusestruktur der Trägereinrichtung in eine Bewegung in der horizontal ausgerichteten Bewegungsebene relativ zu der Baugruppe, umfasst die Vorrichtung typischerweise wenigstens eine Antriebseinrichtung.

Im Hinblick auf die erste Variante gilt, dass die Vorrichtung wenigstens eine mit der modulartigen Gehäusestruktur der Trägereinrichtung koppelbare oder gekoppelte Antriebseinrichtung, welche zur Erzeugung einer die modulartige Gehäusestruktur der Trägereinrichtung in der horizontal ausgerichteten Bewegungsebene relativ zu der Baugruppe bewegenden Antriebskraft eingerichtet ist, umfasst. Die Antriebseinrichtung kann neben wenigstens einer (elektro)motorischen Antriebseinheit, über welche die eigentliche Antriebskraft erzeugbar ist, wenigstens eine mit dieser gekoppelte Übertragungseinheit, über welche die erzeugte Antriebskraft auf das anzutreibende Element, d. h. die modulartige Gehäusestruktur oder das Trägerelement, übertragbar ist, umfassen. Die Antriebseinrichtung kann als Linearantrieb ausgebildet sein oder wenigstens einen solchen umfassen. Konkret kann die Antriebseinrichtung z. B. als Kurbel- oder Spindeltrieb ausgebildet sein oder einen solchen umfassen. Zur Realisierung einer geführten Bewegung der modulartigen Gehäusestruktur in der horizontalen Bewegungsebene bzw. -bahn können, z. B. schienenartige, Führungseinrichtungen an oder in der vorrichtungsseitigen Gehäusestruktur angeordnet oder ausgebildet sein.

Im Hinblick auf die zweite Variante gilt entsprechend, dass die Vorrichtung wenigstens eine mit dem Trägerelement koppelbare oder gekoppelte Antriebseinrichtung, welche zur Erzeugung einer das Trägerelement in der horizontal ausgerichteten Bewegungsebene relativ zu der Baugruppe bewegenden Antriebskraft eingerichtet ist, umfasst. Die Antriebseinrichtung kann auch hier neben wenigstens einer (elektro)motorischen Antriebseinheit, über welche die eigentliche Antriebskraft erzeugbar ist, wenigstens eine mit dieser gekoppelte Übertragungseinheit, über welche die erzeugte Antriebskraft auf das anzutreibende Element, d. h. die modulartige Gehäusestruktur oder das Trägerelement, übertragbar ist, umfassen. Die Antriebseinrichtung kann auch hier als Linearantrieb ausgebildet sein oder wenigstens einen solchen umfassen. Konkret kann eine Antriebseinrichtung z. B. als Kurbel- oder Spindeltrieb ausgebildet sein oder einen solchen umfassen. Zur Realisierung einer geführten Bewegung des Trägerelements in der horizontalen Bewegungsebene bzw. -bahn können, z. B. schienenartige, Führungseinrichtungen an oder in der modulartigen Gehäusestruktur angeordnet oder ausgebildet sein. Die Führungseinrichtungen können in vertikaler Richtung bewegbar gelagert sein, um ein Absenken des Trägerelements zu realisieren.

Das Trägerelement kann also neben der beschriebenen Bewegbarkeit in einer horizontalen Bewegungsebene bzw. -bahn zudem in wenigstens einer weiteren Bewegungsebene bzw. -bahn relativ zu der Baugruppe bewegbar gelagert sein. Eine solche weitere Bewegungsebene bzw. -bahn ist typischerweise vertikal ausgerichtet. Bei jeweiligen Bewegungen des Trägerelements in der vertikal ausgerichteten Bewegungsebene bzw. -bahn handelt es sich typischerweise um Linearbewegungen entlang einer linearen Bewegungsachse (Translationsachse), welche für entsprechende additive Herstellungsverfahren nach Durchführung eines Beschichtungs- und Belichtungsvorgangs charakteristisch sind. Hinsichtlich der zur Bewegung des Trägerelements in der vertikal ausgerichteten Bewegungsebene erforderlichen Antriebseinrichtungen gelten die Ausführungen im Zusammenhang mit der Bewegung des Trägerelements in der horizontal ausgerichteten Bewegungsebene relativ zu der Baugruppe analog.

Der konstruktive Aufbau der hierin beschriebenen Vorrichtung erlaubt die Bewegung eines die Bauebene umfassenden Trägerelements relativ zu einer kombinierten Beschichtungs- und Belichtungseinrichtung. Die Bewegung des Trägerelements relativ zu der Baugruppe erfolgt in einer horizontalen Bewegungsebene bzw. -bahn; das Trägerelement ist sonach ähnlich dem Prinzip eines Plotters hin und her bewegbar. Wesentlich ist dabei, dass, wie im Weiteren näher erläutert wird, bei jeweiligen Bewegungen des Trägerelements relativ zu der Baugruppe sowohl Beschichtungs- als auch Belichtungsvorgänge durchgeführt werden können. Eine Bewegung des Trägerelements relativ zu der Baugruppe ermöglicht sonach eine zumindest abschnittsweise, insbesondere vollständige, Ausbildung einer definierten Baumaterialschicht sowie eine zumindest abschnittsweise, insbesondere vollständige, selektive Belichtung der ausgebildeten Baumaterialschicht. Die Beschichtung und die Belichtung erfolgt dabei jeweils während der horizontalen Bewegung des Trägerelements relativ zu der Baugruppe. Die Vorrichtung ermöglicht somit die simultane Durchführung von Beschichtungs- und Belichtungsvorgängen, sodass Leer- bzw. Nebenzeiten reduziert, gegebenenfalls sogar eliminiert, und Bauzeiten entsprechend optimiert werden können.

Durch die lagefeste Anordnung oder Ausbildung der Baugruppe, d. h. der Beschichtungs- und Belichtungseinrichtung, sind zudem Justiervorgänge dieser Einrichtungen vereinfacht, da die Baugruppe typischerweise in "nur" einer definierten Position und Ausrichtung relativ zu der Bauebene anordenbar oder angeordnet ist. Die Position und Ausrichtung der Baugruppe relativ zu der Bauebene ist im Hinblick auf die Beschichtungseinrichtung optimiert, sodass der über jeweilige Beschichtungselemente ausbildbare Baumaterialschicht eine gewünschte Schichteigenschaften, insbesondere eine gewünschte Schichtdicke, aufweist. Die Position und Ausrichtung der Baugruppe relativ zu der Bauebene ist zudem im Hinblick auf die Belichtungseinrichtung optimiert, sodass der über jeweilige Belichtungselemente erzeugbare Energiestrahl mit gewünschten Strahleigenschaften, d. h. z. B. einer gewünschten Intensität, auf eine jeweils selektiv zu belichtende bzw. zu verfestigende Baumaterialschicht trifft. Die Baugruppe muss typischerweise nur ein einziges Mal justiert werden, um exakt relativ zu der Bauebene positioniert bzw. ausgerichtet zu sein.

Insgesamt liegt eine, insbesondere im Hinblick auf die Reduzierung bzw. Optimierung der Bauzeit, verbesserte Vorrichtung zur additiven Herstellung dreidimensionaler Objekte vor.

Die lagefeste Anordnung bzw. Ausbildung der Baugruppe an der vorrichtungsseitigen Gehäusestruktur kann durch eine an der Gehäusestruktur befestigte Aufnahmestruktur, in welcher wenigstens die Baugruppe, d. h. die Beschichtungseinrichtung und die Belichtungseinrichtung, baulich integriert angeordnet oder ausgebildet ist, realisiert sein. Durch die Anordnung oder Ausbildung der Beschichtungseinrichtung und der Belichtungseinrichtung in der Aufnahmestruktur ist eine baulich kompakte Ausgestaltung der Baugruppe gegeben. Durch die Befestigung der Aufnahmestruktur an der vorrichtungsseitigen Gehäusestruktur ist eine exakte Positionierung und Ausrichtung der Beschichtungseinrichtung und der Belichtungseinrichtung relativ zu der Bauebene gegeben. Hierfür kann die Aufnahmestruktur mit geeigneten Befestigungselementen ausgestattet sein, welche dazu eingerichtet sind, die Aufnahmestruktur, z. B. form- und/oder kraftschlüssig, an geeigneten Gegenbefestigungselementen der vorrichtungsseitigen Gehäusestruktur zu befestigen. Bei entsprechenden Befestigungselementen kann es sich um Kraftschlusselemente, d. h. z. B. bolzenartige Gewindeelemente, handeln, welche eine kraftschlüssige Befestigung der Aufnahmestruktur an geeigneten Gegenbefestigungselementen, d. h. z. B. Gewindebohrungen, der vorrichtungsseitigen Gehäusestruktur ermöglichen. Selbstverständlich ist eine umgekehrte Konfiguration ebenso möglich.

Die Aufnahmestruktur kann gesonderte Aufnahmeabteile zur Aufnahme von der Beschichtungseinrichtung zugehörigen Funktionselementen, d. h. z. B. jeweiliger Aufbringungselemente sowie jeweiliger, insbesondere klingenartiger bzw. - förmiger Beschichtungselemente, sowie zur Aufnahme von der Belichtungseinrichtung zugehörigen Funktionselementen, d. h. z. B. jeweiliger, insbesondere als Laserdiodenelemente ausgebildeter, Belichtungselemente, umfassen. Es können also gesonderte Aufnahmeabteile für jeweilige Aufbringungs-, Beschichtungs- und Belichtungselemente vorhanden sein, was der vorstehend erwähnten exakten Positionierung und Ausrichtung der Beschichtungseinrichtung und der Belichtungseinrichtung relativ zu der Bauebene dienlich ist.

In der Aufnahmestruktur, d. h. in jeweiligen hierfür vorgesehenen Aufnahmeabteilen, können zusätzlich Funktionselemente weiterer Funktionskomponenten der Vorrichtung angeordnet oder ausgebildet sein. Einzelne, mehrere oder sämtliche Funktionselemente weiterer Funktionskomponenten der Vorrichtung können also zusätzlich zu den Funktionselementen der Baugruppe baulich integriert in der Aufnahmestruktur angeordnet oder ausgebildet sein. Eine entsprechende Anordnung oder Ausbildung jeweiliger Funktionselemente weiterer Funktionskomponenten der Vorrichtung bedingt gleichermaßen, dass diese weiteren Funktionselemente lagefest an der vorrichtungsseitigen Gehäusestruktur angeordnet oder ausgebildet sind:
Eine in einem (weiteren) Aufnahmeabteil der Aufnahmestruktur angeordnete oder ausgebildete und somit lagefest an der vorrichtungsseitigen Gehäusestruktur angeordnete oder ausgebildete weitere Funktionskomponente der Vorrichtung kann z. B. eine Absaugeinrichtung, welche zur Absaugung von sich bauprozessbedingt aus einer Baumaterialschicht gelöstem Baumaterial ("Schweißspritzer") und/oder zur Absaugung von bauprozessbedingt entstehenden Prozessgasen eingerichtet ist, sein. Die Absaugeinrichtung umfasst wenigstens ein Absaugelement, vermittels welchem eine Saugströmung ausbildbar ist, welche ein Entfernen von sich bauprozessbedingt aus einer Baumaterialschicht gelöstem Baumaterial und/oder zur Absaugung von bauprozessbedingt entstehenden Prozessgasen ermöglicht. Das Absaugelement kann von einer Saugströmung durchströmbar oder durchströmt sein und entsprechend mit einer Strömungserzeugungseinrichtung, d. h. z. B. einer Pumpeneinrichtung, gekoppelt sein. In dem Absaugelement kann wenigstens eine Durchtrittsöffnung zum Durchtritt eines von der Belichtungseinrichtung erzeugten Energiestrahls ausgebildet sein. Das Absaugelement kann eine längliche, insbesondere rohrartige, gegebenenfalls trichterförmige, geometrische Gestalt aufweisen.

Eine in einem (weiteren) Aufnahmeabteil der Aufnahmestruktur angeordnete oder ausgebildete und somit lagefest an der vorrichtungsseitigen Gehäusestruktur angeordnete oder ausgebildete weitere Funktionskomponente der Vorrichtung kann (alternativ oder ergänzend) z. B. eine Glättungs- und/oder Ebnungseinrichtung, welche zur zumindest abschnittsweisen Glättung und/oder Ebnung einer selektiv verfestigten Baumaterialschicht eingerichtet ist, sein. Die Glättungs- und/oder Ebnungseinrichtung umfasst wenigstens ein Glättungs- und/oder Ebnungselements, vermittels welchem es auf eine selektiv verfestigte Baumaterialschicht einwirken kann, um bauprozessbedingt in der Baumaterialschicht entstandene Unebenheiten, d. h. z. B. kraterartige Erhebungen, in der Baumaterialschicht zu entfernen, d. h. die Baumaterialschicht, zu glätten bzw. zu ebnen, bevor auf dieser eine weitere Baumaterialschicht ausgebildet wird. Das Glättungs- und/oder Ebnungselement kann z. B. als ein Rakel oder als ein, gegebenenfalls rotierbar antreibbares, Schleifelement ("Schleifwalze") ausgebildet sein.

Eine in einem (weiteren) Aufnahmeabteil der Aufnahmestruktur angeordnete oder ausgebildete und somit lagefest an der vorrichtungsseitigen Gehäusestruktur angeordnete oder ausgebildete weitere Funktionskomponente der Vorrichtung kann (alternativ oder ergänzend) z. B. eine Erfassungseinrichtung, welche zur Erfassung wenigstens einer die Güte einer zu verfestigenden und/oder einer selektiv verfestigten Baumaterialschicht, d. h. insbesondere deren Oberfläche, beschreibenden Erfassungsgröße eingerichtet ist, sein. Die Erfassungseinrichtung umfasst wenigstens ein Erfassungselement, vermittels welchem Bilddaten einer zu verfestigenden und/oder einer selektiv verfestigten Baumaterialschicht aufgenommen werden können. Das Erfassungselement kann z. B. als ein optisches Bildaufnahmeelement, insbesondere eine Kamera, ausgebildet sein. Aufgenommene Bilddaten sind vermittels geeigneter Auswertealgorithmen qualitativ oder quantitativ im Hinblick auf bestimmte die Güte der Baumaterialschicht beschreibende Erfassungsgrößen auswertbar. Bei entsprechenden Erfassungsgrößen kann es sich um die Güte der Baumaterialschicht beeinflussende Merkmale, d. h. z. B. Unebenheiten, wie z. B. kraterartige Erhebungen, Unregelmäßigkeiten, etc., einer Baumaterialschicht handeln. Die aufgenommene und gegebenenfalls entsprechend ausgewertete Bilddaten vermittels geeigneter Visualisierungsalgorithmen visualisierbar, sodass sich ein zwei- oder dreidimensionales (topologisches) Abbild, insbesondere der Oberfläche, einer Baumaterialschicht, erstellen und auf einer geeigneten Anzeigeeinrichtung, welche gegebenenfalls einen Bestandteil der Vorrichtung bildet, anzeigen lässt.

Jeweilige Aufnahmeabteile der Aufnahmestruktur können unter Ausbildung der Aufnahmestruktur, insbesondere in horizontaler Richtung, (beschädigungs- bzw. zerstörungsfrei) lösbar miteinander verbindbar oder verbunden sein. Die Aufnahmestruktur kann sich sonach aus einzelnen miteinander verbindbaren Aufnahmeabteilen bedarfsweise zusammensetzen, mithin bedarfsweise auf- oder abrüsten lassen. An jeweiligen Aufnahmeabteilen sind hierfür geeignete Verbindungselemente angeordnet oder ausgebildet, über deren Zusammenwirken sich eine, z. B form- und/oder kraftschlüssige, lösbare Verbindung mehrerer Aufnahmeabteile an- bzw. miteinander ausbilden lässt. Bei entsprechenden Verbindungselementen kann es sich um Formschlusselemente, d. h. z. B. Rastvorsprünge, oder Kraftschlusselemente, d. h. z. B. bolzenartige Gewindeelemente, handeln, welche eine formschlüssige oder kraftschlüssige Befestigung eines Aufnahmeabteils an geeigneten Gegenformschlusselementen, d. h. z. B. Rastaufnahmen, oder an geeigneten Gegenkraftschlusselementen, d. h. z. B. Gewindebohrungen, eines weiteren Aufnahmeabteils ermöglichen.

Die Belichtungseinrichtung kann mehrere, insbesondere zu mehreren Gruppen zusammengefasste, Belichtungselemente, welche jeweils zur Erzeugung eines Energiestrahls zur selektiven Belichtung einer selektiv zu verfestigenden Baumaterialschicht eingerichtet sind, umfassen. Die Beschichtungseinrichtung kann zwischen einer ersten Anzahl an Belichtungselementen, insbesondere einer ersten Gruppe mehrerer Belichtungselemente, und einer zweiten Anzahl an Belichtungselementen, insbesondere einer zweiten Gruppe mehrerer Belichtungselemente, angeordnet oder ausgebildet sein. Eine derartige Anordnung der Beschichtungseinrichtung zwischen jeweiligen Belichtungselementen der Belichtungseinrichtung ist für die bereits erwähnte Realisierung simultaner Beschichtung- und Belichtungsvorgänge während einer Bewegung des Trägerelements relativ zu der Baugruppe zweckmäßig. Die Anordnung kann konstruktiv derart umgesetzt sein, dass eine erste Anzahl an Belichtungselementen, insbesondere eine erste Gruppe an Belichtungselementen, an einem ersten Seitenbereich der Beschichtungseinrichtung angeordnet oder ausgebildet ist, und eine zweite Anzahl an Belichtungselementen, insbesondere eine zweite Gruppe an Belichtungselementen, an einem, insbesondere dem ersten Seitenbereich gegenüber liegenden, zweiten Seitenbereich der Beschichtungseinrichtung angeordnet oder ausgebildet ist. Selbstverständlich kann eine derartige Anordnung durch entsprechende Aufnahmeabteile realisiert sein, sodass in einem ersten Aufnahmeabteil eine erste Anzahl oder Gruppe an Belichtungselementen, in einem zu dem ersten Aufnahmeabteil benachbart angeordneten zweiten Aufnahmeabteil wenigstens ein Aufbringungselement und wenigstens ein Beschichtungselement und in einem zu dem zweiten Aufnahmeabteil benachbarten dritten Aufnahmeabteil eine zweite Anzahl oder Gruppe an Belichtungselementen angeordnet oder ausgebildet ist.

Die Beschichtungseinrichtung umfasst dabei grundsätzlich wenigstens ein Aufbringungselement und wenigstens ein Beschichtungselement. Im Hinblick auf Anordnung und Anzahl jeweiliger Aufbringungs- und Beschichtungselemente ergeben sich unterschiedliche Konfigurationsmöglichkeiten der Beschichtungseinrichtung:
Gemäß einer ersten beispielhaften Konfiguration kann die Beschichtungseinrichtung mehrere (unmittelbar) benachbart angeordnete Beschichtungselemente und ein, gegebenenfalls einziges, Aufbringungselement umfassen. Das Aufbringungselement kann dazu eingerichtet sein, eine bestimmte Baumaterialmenge zwischen wenigstens zwei Beschichtungselemente auf die Bauebene aufzubringen. Das Aufbringungselement ist sonach derart relativ zu den Beschichtungselementen angeordnet, dass es Baumaterial in einen durch wenigstens zwei unmittelbar benachbart angeordnete Beschichtungselemente gebildeten Zwischenraum aufbringen kann. Die Beschichtungselemente können, z. B. in vertikaler Richtung, zwischen einer Beschichtungsposition, in welcher die Ausbildung einer definierten bzw. gewünschten Baumaterialschicht möglich ist, und einer Nichtbeschichtungsposition, in welcher die Ausbildung einer definierten bzw. gewünschten Baumaterialschicht nicht möglich ist, bewegbar gelagert sein. Typischerweise ist in abwechselnder Abfolge immer ein Beschichtungselement in die Beschichtungsposition und ein Beschichtungselement in die Nichtbeschichtungsposition bewegt.

Gemäß einer zweiten beispielhaften Konfiguration kann die Beschichtungseinrichtung mehrere benachbart angeordnete Aufbringungselemente und ein (einziges) Beschichtungselement umfassen. Die Aufbringungselemente können dazu eingerichtet sein, eine bestimmte Baumaterialmenge seitlich benachbart zu dem, typischerweise zentrisch zwischen jeweiligen Aufbringungselementen angeordneten oder ausgebildeten, Beschichtungselement auf die Bauebene aufzubringen. Ein erstes Aufbringungselement oder eine Gruppe erster Aufbringungselemente können links des Beschichtungselements und ein zweites Aufbringungselement oder eine Gruppe zweiter Aufbringungselemente können rechts des Beschichtungselements angeordnet oder ausgebildet sein.

Für jedwede Konfiguration gilt, dass die Aufbringungs- und Beschichtungselemente - analog den Belichtungselementen - typischerweise in einer definierten Position und Ausrichtung, insbesondere in einem definierten Abstand, relativ zu dem Trägerelement anordenbar oder angeordnet sind, um eine definierte Baumaterialschicht auszubilden.

Im Zusammenhang mit der erwähnten simultanen Durchführung von Beschichtungs- und Belichtungsvorgängen ist es zweckmäßig, wenn das Trägerelement zwischen einer ersten Position, in welcher ein erster Trägerelementabschnitt, insbesondere ein ein erstes Ende des Trägerelements bildender Trägerelementabschnitt, unterhalb der Beschichtungseinrichtung angeordnet ist, und einer zweiten Position, in welcher ein zweiter Trägerelementabschnitt, insbesondere ein ein zweites Ende des Trägerelements bildender Trägerelementabschnitt, unterhalb der Beschichtungseinrichtung angeordnet ist, bewegbar gelagert ist.

Ausgehend von der ersten beispielhaften Konfiguration der Beschichtungseinrichtung - geltend für den Fall, in dem jeweilige der Beschichtungseinrichtung zugehörige Aufbringungs- und Beschichtungselemente zwischen einer ersten Anzahl an Belichtungselementen, insbesondere einer ersten Gruppe an Belichtungselementen, und einer zweiten Anzahl an Belichtungselementen, insbesondere einer zweiten Gruppe an Belichtungselementen, angeordnet oder ausgebildet sind - kann die Ausbildung einer Baumaterialschicht bei Bewegung des Trägerelements ausgehend von der ersten Position in Richtung der zweiten Position über ein erstes Beschichtungselement erfolgen. Die Aufbringung von Baumaterial zwischen die Beschichtungselemente erfolgt vermittels eines entsprechend angeordneten Aufbringungselements. Dabei kann die Belichtung der ausgebildeten Baumaterialschicht während der Bewegung des Trägerelements in Richtung der zweiten Position vermittels wenigstens eines der ersten Anzahl zugehörigen Belichtungselements erfolgen. In analoger Weise kann die Ausbildung einer Baumaterialschicht bei Bewegung des Trägerelements ausgehend von der zweiten Position in Richtung der ersten Position über ein zweites Beschichtungselement erfolgen. Die Aufbringung von Baumaterial zwischen die Beschichtungselemente erfolgt wiederum vermittels eines entsprechend angeordneten Aufbringungselements. Die Belichtung der ausgebildeten Baumaterialschicht kann während der Bewegung des Trägerelements in Richtung der ersten Position vermittels wenigstens eines der zweiten Anzahl zugehörigen Belichtungselements erfolgen.

Ausgehend von der zweiten beispielhaften Konfiguration der Beschichtungseinrichtung - geltend für den Fall, in dem jeweilige der Beschichtungseinrichtung zugehörige Aufbringungs- und Beschichtungselemente zwischen einer ersten Anzahl an Belichtungselementen, insbesondere einer ersten Gruppe an Belichtungselementen, und einer zweiten Anzahl an Belichtungselementen, insbesondere einer zweiten Gruppe an Belichtungselementen, angeordnet oder ausgebildet sind - kann die Aufbringung von Baumaterial auf die Bauebene bei Bewegung des Trägerelements ausgehend von der ersten Position in Richtung der zweiten Position über ein erstes Aufbringungselement erfolgen. Die Ausbildung der Baumaterialschicht erfolgt vermittels des (zentrisch) zwischen den Aufbringungselementen angeordneten Beschichtungselements. Die Belichtung der vermittels des Beschichtungselements ausgebildeten Baumaterialschicht kann während der Bewegung des Trägerelements in Richtung der zweiten Position vermittels wenigstens eines der ersten Anzahl zugehörigen Belichtungselements erfolgen. Die Aufbringung von Baumaterial auf die Bauebene kann bei Bewegung des Trägerelements ausgehend von der zweiten Position in Richtung der ersten Position über ein zweites Aufbringungselement erfolgen. Die Ausbildung der Baumaterialschicht erfolgt wiederum vermittels des (zentrisch) zwischen den Aufbringungselementen angeordneten Beschichtungselements. Die Belichtung der vermittels des Beschichtungselements ausgebildeten Baumaterialschicht kann während der Bewegung des Trägerelements in Richtung der ersten Position vermittels wenigstens eines der zweiten Anzahl zugehörigen Belichtungselements erfolgen.

Im Hinblick auf eine beispielhafte plattenartige bzw. -förmige geometrische Gestalt des Trägerelements kann in der ersten Position ein linker Endbereich des Trägerelements unterhalb der Beschichtungseinrichtung angeordnet sein. In der zweiten Position kann ein rechter Endbereich des Trägerelements unterhalb der Beschichtungseinrichtung angeordnet sein. Die Bewegung eines in der ersten Position befindlichen Trägerelements erfolgt sonach nach links, um das Trägerelement in die zweite Position zu bewegen. Entsprechend erfolgt die Bewegung eines in der zweiten Position befindlichen Trägerelements sonach nach rechts, um das Trägerelement in die erste Position zu bewegen. Insgesamt kann bei jeder horizontalen Bewegung des Trägerelements relativ zu der Baugruppe, d. h. unabhängig davon, ob dieses in Richtung der ersten oder zweiten Position bewegt wird, simultan ein Aufbringungs-, Beschichtungs- und ein Belichtungsvorgang durchgeführt werden ("Plotter-Prinzip").

Einzelne, mehrere oder sämtliche Belichtungselemente können in wenigstens einem Bewegungsfreiheitsgrad relativ zu der Bauebene bewegbar an der Aufnahmestruktur angeordnet oder ausgebildet sein. Durch eine bewegbare Lagerung jeweiliger Belichtungselemente lassen sich unterschiedliche Belichtungsprofile realisieren, über welche sich diverse Verfestigungsparameter, z. B. Verfestigungsgrade, einer zu verfestigenden Baumaterialschicht variieren lassen. Denkbar ist auch eine Temperierung einer zu verfestigenden oder verfestigten Baumaterialschicht vermittels entsprechend ausgerichteter Belichtungselemente. Bewegungen eines Belichtungselements können translatorische Bewegungsfreiheitsgrade entlang wenigstens einer Translationsachse und/oder rotatorische Bewegungsfreiheitsgrade um wenigstens eine Rotationsachse beinhalten. Bei einer Bewegung eines Belichtungselements kann es sich sonach um eine Linearbewegung entlang einer linearen Bewegungsachse (Translationsachse) und/oder um eine Drehbewegung um eine Drehachse (Rotationsachse) handeln. Selbstverständlich können einzelne, mehrere oder sämtliche Belichtungselemente in unterschiedlichen Bewegungsfreiheitsgraden kombiniert bewegbar sein. In analoger Weise können auch entsprechende Beschichtungselemente in wenigstens einem Bewegungsfreiheitsgrad relativ zu der Bauebene bewegbar an der Aufnahmestruktur angeordnet oder ausgebildet sein. Derart ist die erwähnte bewegbare Lagerung eines Beschichtungselements zwischen der erwähnten Beschichtungs- und der erwähnten Nichtbeschichtungsposition realisierbar.

Die Vorrichtung kann eine der Beschichtereinrichtung, insbesondere jeweiligen Aufbringungselementen, zuordenbare oder zugeordnete Bevorratungseinrichtung umfassen. Die Bevorratungseinrichtung ist zur Bevorratung von Baumaterial eingerichtet ist. Die Bevorratungseinrichtung ist derart mit der Beschichtungseinrichtung, insbesondere jeweiligen verbindbar oder verbunden, dass über die Bevorratungseinrichtung diskontinuierlich oder kontinuierlich eine bestimmte Menge an Baumaterial zuführbar ist. Die Menge an der Beschichtungseinrichtung zugeführtem Baumaterial ist zweckmäßig an die Bewegung des Trägerelements, d. h. insbesondere die Geschwindigkeit des Trägerelements, relativ zu der Baugruppe angepasst. Hierfür kann die Bevorratungseinrichtung mit einer Datenspeichereinrichtung verbunden sein, in welcher bestimmte Bewegungsprofile, insbesondere Geschwindigkeitsprofile, des Trägerelements relativ zu der Baugruppe datenmäßig hinterlegt sind.

Das Trägerelement, gegebenenfalls die gesamte Trägereinrichtung, ist zweckmäßig von der vorrichtungsseitigen Gehäusestruktur schwingungsentkoppelt. Derart ist die Einbringung von auf bei Bewegungen des Trägerelements relativ zu der Baugruppe erzeugten Schwingungen und eine damit einhergehende mögliche Beeinträchtigung von Belichtungsvorgängen unterbunden. Die Schwingungsentkopplung ist vermittels geeigneter zwischen das Trägerelement bzw. die Trägereinrichtung und die Baugruppe geschalteter Entkopplungselemente bzw. -strukturen, d. h. z. B. Elastomorelemente bzw. - strukturen, realisiert.

Die Erfindung betrifft ferner ein Verfahren zur additiven Herstellung wenigstens eines dreidimensionalen Objekts durch sukzessive schichtweise selektive Belichtung und damit einhergehende Verfestigung einzelner Baumaterialschichten aus verfestigbarem Baumaterial vermittels wenigstens eines Energiestrahls. Bei dem Verfahren kann es sich um ein selektives Laserschmelzverfahren (SLM-Verfahren) oder um ein selektives Lasersinterverfahren (SLS-Verfahren) handeln. Das Verfahren zeichnet sich dadurch aus, dass eine wie beschriebene Vorrichtung zur additiven Herstellung wenigstens eines dreidimensionalen Objekts verwendet wird. Mithin gelten sämtliche Ausführungen im Zusammenhang der Vorrichtung analog für das Verfahren.

Die Erfindung ist anhand von Ausführungsbeispielen in den Zeichnungsfiguren näher erläutert. Dabei zeigen:

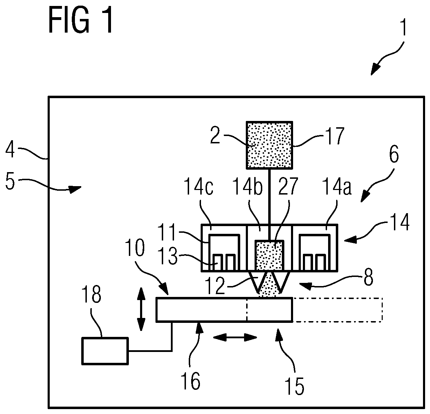

- Fig. 1 ― 22: je eine Prinzipdarstellung einer Vorrichtung zur additiven Herstellung eines dreidimensionalen Objekts gemäß einem Ausführungsbeispiel.

Fig. 1 zeigt eine Prinzipdarstellung einer Vorrichtung 1 gemäß einem Ausführungsbeispiel. Die Vorrichtung 1 dient zur additiven Herstellung eines dreidimensionalen Objekts, d. h. beispielsweise eines technischen Bauteils bzw. einer technischen Bauteilgruppe, durch sukzessive schichtweise selektive Belichtung und damit einhergehende Verfestigung von Baumaterialschichten 9 aus einem verfestigbaren Baumaterial 2 vermittels wenigstens eines Energiestrahls 3. Die sukzessive schichtweise selektive Verfestigung jeweiliger zu verfestigender Baumaterialschichten 9 erfolgt derart, dass ein oder mehrere Energiestrahlen 3 selektiv auf bestimmte zu verfestigende, jeweiligen schichtbezogenen Querschnittsgeometrien des herzustellenden Objekts entsprechende Bereiche jeweiliger Baumaterialschichten 9 gerichtet werden ("selektive Belichtung").

Bei dem verfestigbaren Baumaterial 2 handelt es sich z. B. um ein Metallpulver(gemisch), d. h. z. B. um ein Aluminiumpulver(gemisch) oder Stahlpulver(gemisch). Bei dem Energiestrahl 3 handelt es sich z. B. um einen Laserstrahl, mithin ist die Vorrichtung 1 zur Durchführung selektiver Laserschmelzverfahren oder selektiver Lasersinterverfahren eingerichtet.

Die Vorrichtung 1 umfasst eine Gehäusestruktur 4, in welcher die zur Durchführung additiver Bauprozesse erforderlichen Funktionskomponenten der Vorrichtung 1 angeordnet oder ausgebildet sind. Die Gehäusestruktur 4 umfasst eine inertisierbare Prozesskammer 5. In der Prozesskammer 5 kann eine Schutzgasatmosphäre, d. h. z. B. eine Argon- oder Stickstoffatmosphäre, und/oder ein bestimmtes Druckniveau ausgebildet und aufrechterhalten werden.

Die Vorrichtung 1 umfasst wenigstens eine im Weiteren abgekürzt als "Baugruppe" bezeichnete kombinierte Beschichtungs- und Belichtungsbaugruppe 6. Die Baugruppe 6 umfasst eine Beschichtungseinrichtung 8 und eine Belichtungseinrichtung 11.

Die Beschichtungseinrichtung 8 ist zur Durchführung von Beschichtungsvorgängen zur Ausbildung von selektiv zu belichtenden bzw. selektiv zu verfestigenden Baumaterialschichten 9 in der Bauebene 10, d. h. der Ebene, in welcher entsprechende Beschichtungs- und Belichtungsvorgänge durchgeführt werden, eingerichtet. In einem jeweiligen Beschichtungsvorgang wird eine selektiv zu belichtende bzw. selektiv zu verfestigende Baumaterialschicht 9 ausgebildet. Die Beschichtungseinrichtung 8 umfasst ein oder mehrere oberhalb der Bauebene 10 angeordnete oder ausgebildete, wenigstens eine Aufbringungsöffnung (nicht näher bezeichnet), welche typischerweise über ein zwischen einer Offen- und Schließstellung bewegbares Schließelement (nicht näher bezeichnet) verschließbar ist, umfassende, Aufbringungselemente 27, 27a, 27b, gegebenenfalls in (parallel) benachbarter Anordnung und Ausrichtung, sowie ein oder mehrere klingenartige bzw. -förmige Beschichtungselemente 12, gegebenenfalls in (parallel) benachbarter Anordnung und Ausrichtung.

Der Beschichtereinrichtung 8 bzw. den jeweiligen Aufbringungselementen 27, 27a, 27b ist eine Bevorratungseinrichtung 17 zugeordnet. Die Bevorratungseinrichtung 17 ist zur Bevorratung von Baumaterial 2 eingerichtet. Die Bevorratungseinrichtung 17 ist derart mit der Beschichtungseinrichtung 8 bzw. den jeweiligen Aufbringungselementen 27, 27a, 27b verbunden, dass über die Bevorratungseinrichtung 17 diskontinuierlich oder kontinuierlich eine bestimmte Menge an Baumaterial 2 zuführbar ist. Die Menge an der Beschichtungseinrichtung 8 zugeführtem Baumaterial 2 kann an die im Weiteren erläuterte Bewegung des Trägerelements 16 einer Trägereinrichtung 15, d. h. insbesondere die Geschwindigkeit des Trägerelements 16, relativ zu der Baugruppe 6 angepasst sein.

Die Belichtungseinrichtung 11 ist zur Durchführung von Belichtungsvorgängen zur selektiven Belichtung und damit einhergehenden selektiven Verfestigung von vermittels der Beschichtungseinrichtung 8 in der Bauebene 10 ausgebildeten Baumaterialschichten 9 eingerichtet. In einem jeweiligen Belichtungsvorgang wird eine vermittels der Beschichtungseinrichtung 8 ausgebildete Baumaterialschicht 9 selektiv belichtet und damit selektiv verfestigt. Die Belichtungseinrichtung 11 umfasst mehrere oberhalb der Bauebene 10 angeordnete oder ausgebildete Belichtungselemente 13. Die Belichtungselemente 13 sind als Laserdiodenelemente ausgebildet. Denkbar wäre es auch, dass es sich bei den Belichtungselementen 13 um mit, z. B. außerhalb der Gehäusestruktur 4 angeordneten, Laserdiodenelementen (nicht gezeigt) gekoppelte, insbesondere linsenförmige, optische Elemente oder um Scannerelemente als Teil einer optischen Scannereinrichtung handelt.

Die Baugruppe 6 ist lage- bzw. ortsfest, d. h. nicht bewegbar, an der Gehäusestruktur 4, d. h. typischerweise an einer der Gehäusestruktur 4 zugehörigen Wandung oder an einem an einer der Gehäusestruktur 4 zughörigen Wandung angeordneten oder ausgebildeten Befestigungseinrichtung (nicht gezeigt), angeordnet oder ausgebildet. Die Beschichtungseinrichtung 8 bzw. die dieser zugehörigen Aufbringungselemente 27 und Beschichtungselemente 12 sowie die Belichtungseinrichtung 11 bzw. die dieser zugehörigen Belichtungselemente 13 befindet bzw. befinden sich daher in einer definierten Position, d. h. insbesondere in einem definierten Abstand, und einer definierten Ausrichtung relativ zu der Bauebene 10. Die lagefeste Anordnung der Baugruppe 6 an der Gehäusestruktur 4 schließt nicht aus, dass die Baugruppe 6, z. B. zu Service- und/oder Reparaturzwecken, bedarfsweise von der Gehäusestruktur 4 gelöst werden kann. Die Baugruppe 6 kann sonach (beschädigungs- bzw. zerstörungsfrei) lösbar an der Gehäusestruktur 4 befestigt sein.

Die lagefeste Anordnung bzw. Ausbildung der Baugruppe 6 an der Gehäusestruktur 4 ist durch eine an der Gehäusestruktur 4 befestigte Aufnahmestruktur 14, in welcher die Beschichtungseinrichtung 8 und die Belichtungseinrichtung 11 baulich integriert angeordnet ist, realisiert. Die Anordnung der Beschichtungseinrichtung 8 und der Belichtungseinrichtung 11 in der Aufnahmestruktur 14 ergibt eine baulich kompakte Ausgestaltung der Baugruppe 6 sowie eine exakte Positionierung und Ausrichtung der Beschichtungseinrichtung 8 bzw. der Aufbringungs- und Beschichtungselemente 12, 27 und der Belichtungseinrichtung 9 bzw. der Belichtungselemente 13 relativ zu der Bauebene 10. Zu ihrer Befestigung an der Gehäusestruktur 4 ist die Aufnahmestruktur 14 mit Befestigungselementen (nicht näher bezeichnet) ausgestattet, welche dazu eingerichtet sind, die Aufnahmestruktur 4, z. B. form- und/oder kraftschlüssig, an geeigneten Gegenbefestigungselementen (nicht näher bezeichnet) der Gehäusestruktur 4 zu befestigen. Bei entsprechenden Befestigungselementen kann es sich um Kraftschlusselemente, d. h. z. B. bolzenartige Gewindeelemente, handeln, welche eine kraftschlüssige Befestigung der Aufnahmestruktur 4 an geeigneten Gegenbefestigungselementen, d. h. z. B. Gewindebohrungen, der Gehäusestruktur 4 ermöglichen.

Die Aufnahmestruktur 14 umfasst gesonderte Aufnahmeabteile 14a, 14b, 14c zur Aufnahme der der Beschichtungseinrichtung 8 zugehörigen Aufbringungs- und Beschichtungselemente 12, 27 sowie zur Aufnahme der der Belichtungseinrichtung 8 zugehörigen Belichtungselemente 13. Jeweilige Aufnahmeabteile 14a - 14c können unter Ausbildung der Aufnahmestruktur 14, insbesondere in horizontaler Richtung, (beschädigungs- bzw. zerstörungsfrei) lösbar miteinander verbunden sein. Die Aufnahmestruktur 14 kann sich sonach aus einzelnen miteinander verbindbaren Aufnahmeabteilen 14a - 14c bedarfsweise zusammensetzen, mithin bedarfsweise auf- oder abrüsten lassen. An den Aufnahmeabteilen 14a - 14c sind hierfür geeignete Verbindungselemente (nicht näher bezeichnet) angeordnet oder ausgebildet, über deren Zusammenwirken sich eine, z. B form- und/oder kraftschlüssige, lösbare Verbindung mehrerer Aufnahmeabteile 14a - 14c an- bzw. miteinander ausbilden lässt. Bei entsprechenden Verbindungselementen kann es sich um Formschlusselemente, d. h. z. B. Rastvorsprünge, oder Kraftschlusselemente, d. h. z. B. bolzenartige Gewindeelemente, handeln, welche eine formschlüssige oder kraftschlüssige Befestigung eines Aufnahmeabteils 14a - 14c an geeigneten Gegenformschlusselementen, d. h. z. B. Rastaufnahmen, oder an geeigneten Gegenkraftschlusselementen, d. h. z. B. Gewindebohrungen, eines weiteren Aufnahmeabteils 14a - 14c ermöglichen.

Die Anordnung der Aufbringungs- und Beschichtungselemente 12, 27 sowie der Belichtungselemente 13 in jeweiligen Aufnahmeabteilen 14a - 14c ist derart gewählt, dass die Aufbringungs- und Beschichtungselemente 12, 27 zwischen einer ersten Anzahl an Belichtungselementen 13, d. h. einer ersten Gruppe mehrerer Belichtungselemente 13, und einer zweiten Anzahl an Belichtungselementen 13, d. h. einer zweiten Gruppe mehrerer Belichtungselemente 13, angeordnet ist. Die Anordnung ist konstruktiv derart umgesetzt, dass in einem ersten Aufnahmeabteil 14a eine erste Gruppe an Belichtungselementen 13, in wenigstens einem zu dem ersten Aufnahmeabteil 14b benachbart angeordneten zweiten (weiteren) Aufnahmeabteil 14b die Aufbringungs- und Beschichtungselemente 12, 27 und in einem zu dem zweiten Aufnahmeabteil 14b benachbarten dritten (weiteren) Aufnahmeabteil 14c eine zweite Gruppe an Belichtungselementen 13 angeordnet ist.

Die Vorrichtung 1 umfasst weiterhin eine Trägereinrichtung 15. Der Trägereinrichtung 15 ist ein die Bauebene 10 umfassendes, plattenartiges bzw. - förmiges Trägerelement 16 zugehörig. Die Bauebene 10 ist vor Beginn eines additiven Bauprozesses typischerweise durch die der Baugruppe 6 zugewandte Oberfläche bzw. -seite des Trägerelements 16 gebildet. Das Trägerelement 16 ist - wie durch den horizontal ausgerichteten Doppelpfeil angedeutet - in einer horizontal ausgerichteten Bewegungsebene bzw. -bahn relativ zu der Baugruppe 6 bewegbar gelagert. Bei Bewegungen des Trägerelements 16 in der horizontal ausgerichteten Bewegungsebene bzw. -bahn handelt es sich um Linearbewegungen entlang einer linearen Bewegungsachse (Translationsachse).

Das Trägerelement 16 ist - wie durch den vertikal ausgerichteten Doppelpfeil angedeutet - neben der Bewegbarkeit in der horizontalen Bewegungsebene bzw. -bahn zudem in einer vertikalen Bewegungsebene bzw. -bahn relativ zu der Baugruppe 6 bewegbar gelagert. Bei jeweiligen Bewegungen des Trägerelements 16 in der vertikal ausgerichteten Bewegungsebene bzw. -bahn handelt es sich typischerweise um Linearbewegungen entlang einer linearen Bewegungsachse (Translationsachse), welche für entsprechende additive Herstellungsverfahren nach Durchführung eines Beschichtungs- und Belichtungsvorgangs charakteristisch sind.

Bewegungen des Trägerelements 16 in der horizontalen und/oder vertikalen Bewegungsebene bzw. -bahn werden vermittels einer oder mehreren mit dem Trägerelement 16 koppelbaren oder gekoppelten Antriebseinrichtungen 18, auf welche weiter unten näher eingegangen wird, realisiert.

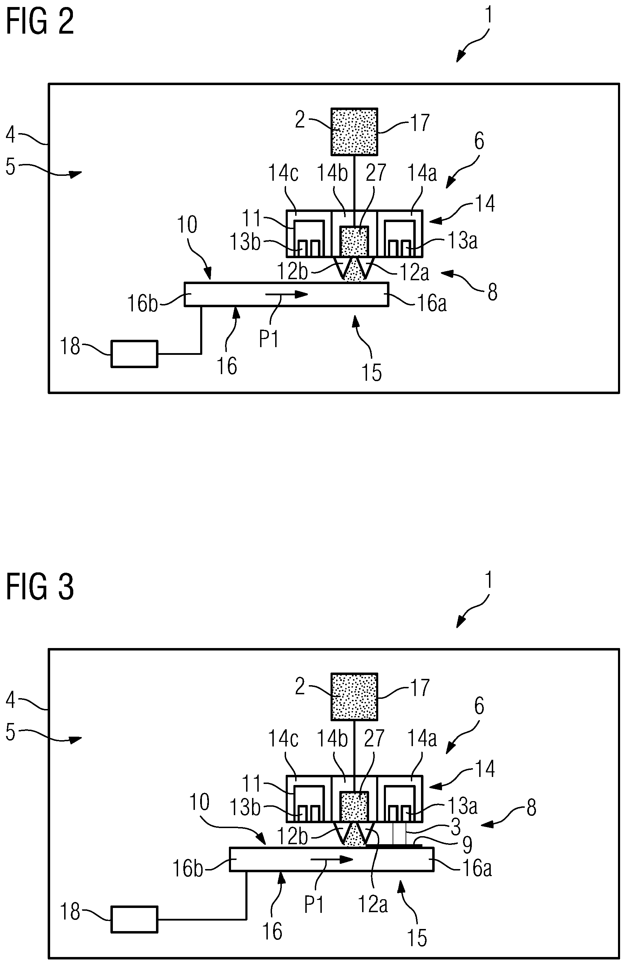

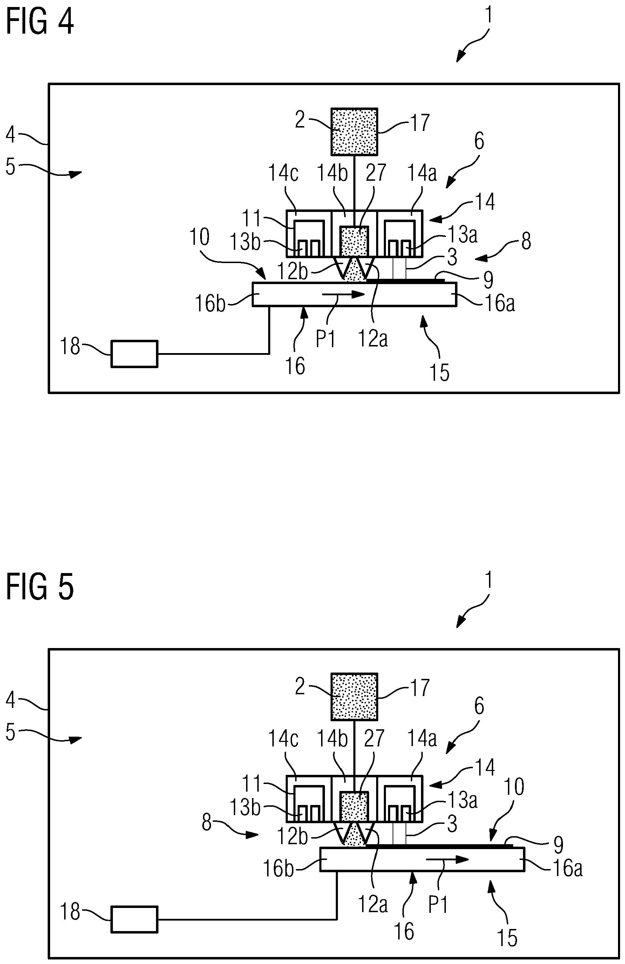

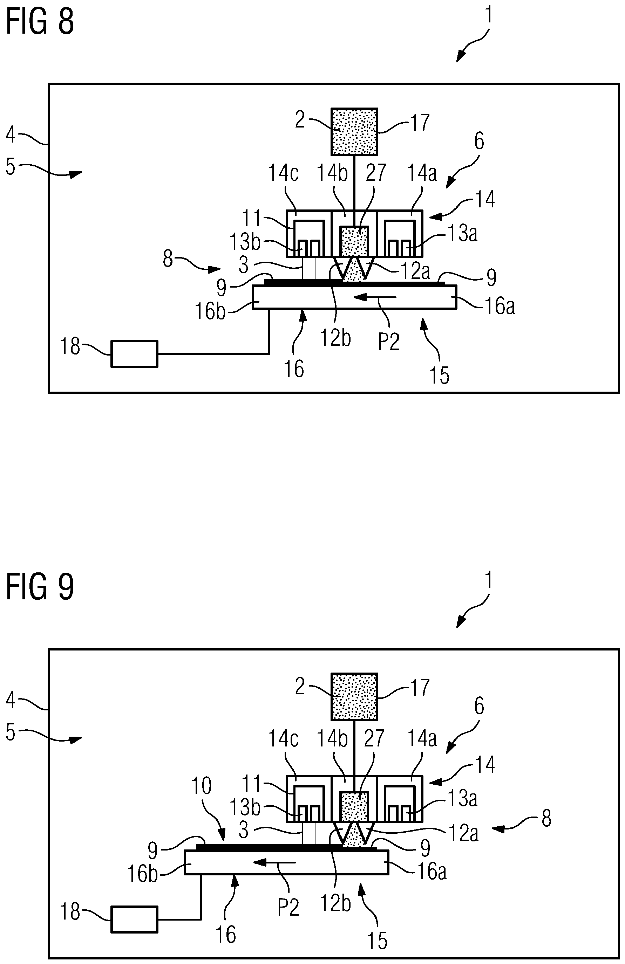

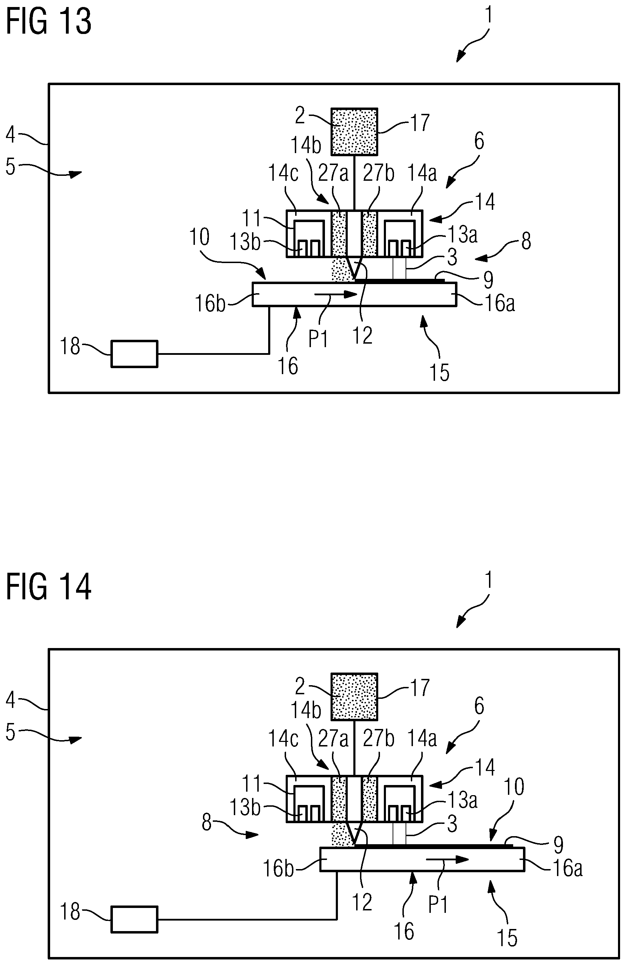

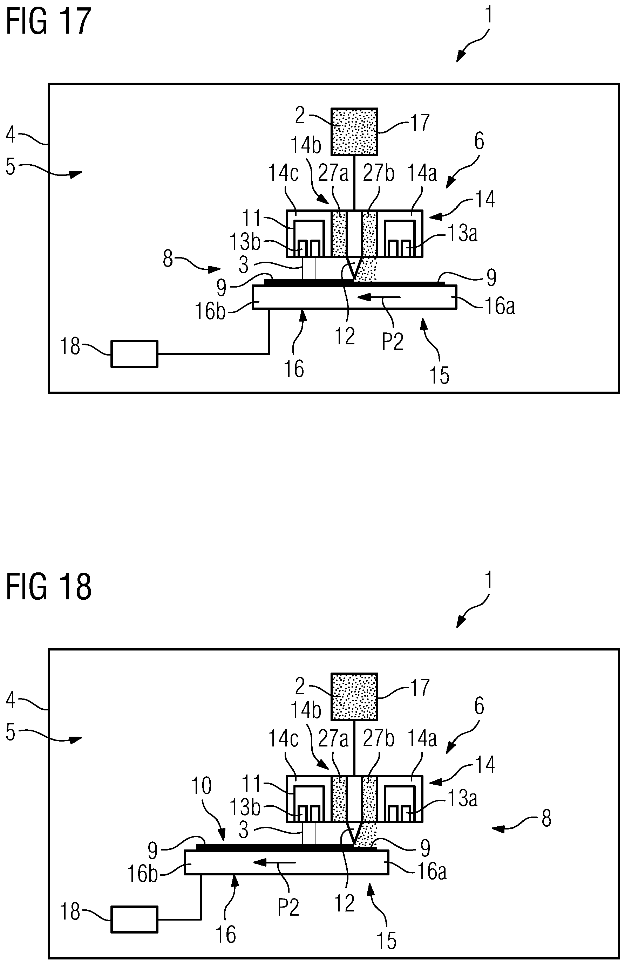

Der konstruktive Aufbau der Vorrichtung 1 erlaubt die Bewegung des Trägerelements 16 relativ zu der Baugruppe 6 in einer horizontalen Bewegungsebene bzw. -bahn; anhand der Fig. 2 bis 10 bzw. der Fig. 11 - 20 ist ersichtlich, dass das Trägerelement 16 ähnlich dem Prinzip eines Plotters in der horizontalen Bewegungsebene relativ zu der Baugruppe 6 hin- und her bewegbar ist. Bei jeweiligen Bewegungen des Trägerelements 16 relativ zu der Baugruppe 6 können sowohl Beschichtungs- als auch Belichtungsvorgänge durchgeführt werden. Bewegungen des Trägerelements 16 relativ zu der Baugruppe 6 ermöglichen sonach sowohl die Aufbringung von Baumaterial 2, die Ausbildung einer definierten Baumaterialschicht 9 sowie eine selektive Belichtung der ausgebildeten Baumaterialschicht 9. Die Aufbringung, Beschichtung und die Belichtung erfolgt also jeweils während der horizontalen Bewegung des Trägerelements 16 relativ zu der Baugruppe 6. Die Vorrichtung 1 ermöglicht somit die simultane Durchführung von Aufbringungs-, Beschichtungs- und Belichtungsvorgängen, sodass Leer- bzw. Nebenzeiten reduziert, gegebenenfalls sogar eliminiert, und Bauzeiten entsprechend optimiert werden können.

Die simultane Durchführung von Aufbringungs-, Beschichtungs- und Belichtungsvorgängen wird im Weiteren zunächst unter Bezugnahme auf die in den Fig. 2 ― 10 gezeigten Prinzipdarstellungen näher erläutert. Gezeigt ist hier eine erste beispielhafte Konfiguration der Beschichtungseinrichtung 8 mit mehreren (unmittelbar) benachbart angeordneten Beschichtungselementen 12a, 12b und einem Aufbringungselement 27. Das Aufbringungselement 27 ist dazu eingerichtet, eine bestimmte Baumaterialmenge zwischen die Beschichtungselemente 12a, 12b auf die Bauebene 10 aufzubringen. Das Aufbringungselement 27 ist sonach derart relativ zu den Beschichtungselementen 12a, 12b angeordnet, dass es Baumaterial 2 in einen durch die unmittelbar benachbart angeordneten Beschichtungselemente 12a, 12b gebildeten Zwischenraum aufbringen kann. Die Beschichtungselemente 12a, 12b können vermittels geeigneter Antriebseinrichtungen (nicht gezeigt), z. B. in vertikaler Richtung, zwischen einer Beschichtungsposition, in welcher die Ausbildung einer definierten bzw. gewünschten Baumaterialschicht 9 möglich ist, und einer Nichtbeschichtungsposition, in welcher die Ausbildung einer definierten bzw. gewünschten Baumaterialschicht 9 nicht möglich ist, bewegbar gelagert sein. Typischerweise ist in abwechselnder Abfolge immer ein Beschichtungselement 12a, 12b in die Beschichtungsposition und ein Beschichtungselement 12a, 12b in die Nichtbeschichtungsposition bewegt.

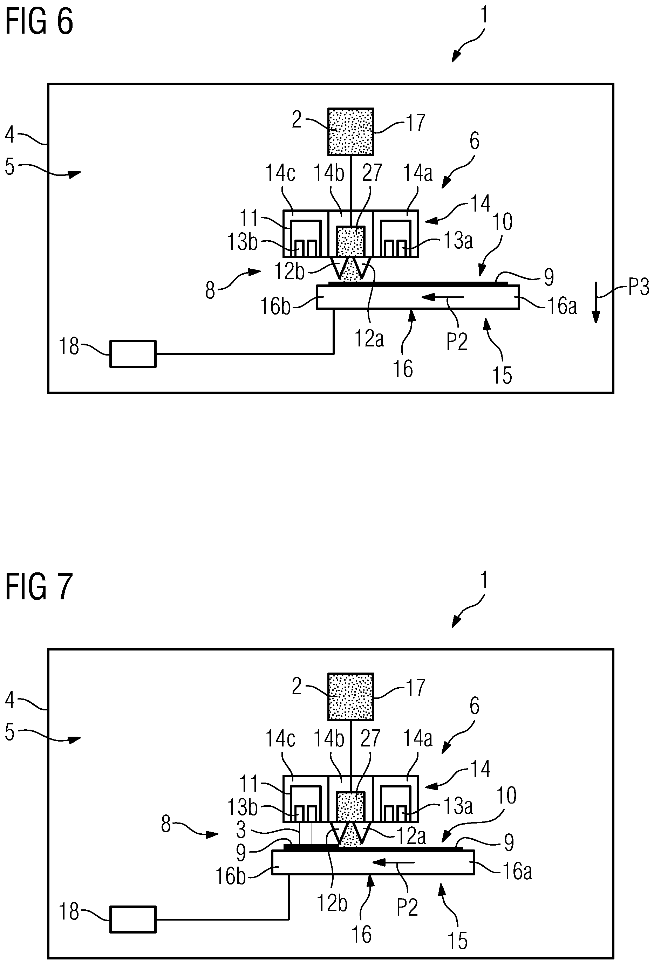

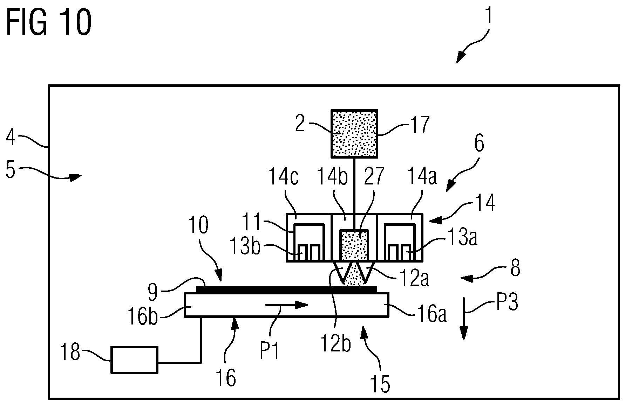

Das Trägerelement 16 ist zwischen einer ersten Position (vgl. Fig. 2), in welcher ein erster Trägerelementabschnitt 16a, d. h. z. B. ein einen ersten Endbereich (rechter Endbereich) des Trägerelements 16 bildender Trägerelementabschnitt 16a, unterhalb der Beschichtungseinrichtung 8 bzw. dem Aufbringungselement 27 angeordnet ist, und einer zweiten Position (vgl. Fig. 6), in welcher ein zweiter Trägerelementabschnitt 16b, d. h. z. B. ein einen zweiten Endbereich des Trägerelements 16 bildender Trägerelementabschnitt 16b, unterhalb der Beschichtungseinrichtung 8 bzw. dem Aufbringungsselement 27 angeordnet ist, bewegbar gelagert. Um das in der ersten Position befindliche Trägerelement 16 in die zweite Position zu bewegen, erfolgt eine horizontale Bewegung des Trägerelements 16 nach rechts. Die horizontale Bewegung des Trägerelements 16 in Richtung der zweiten Position ist durch den in den Fig. 2 ― 6 gezeigten Pfeil P1 angedeutet. Umgekehrt erfolgt eine horizontale Bewegung des Trägerelements 16 nach links, um das in der zweiten Position befindliche Trägerelement 16 in die erste Position zu bewegen. Die horizontale Bewegung des Trägerelements 16 in Richtung der zweiten Position ist durch den in den Fig. 6 - 10 gezeigten Pfeil P2 angedeutet. In Fig. 10 ist das Trägerelement 16 (wieder) in die erste Position bewegt. Selbstverständlich lassen sich die erste und die zweite Position tauschen; vorstehende Ausführungen gelten analog.

Ausgehend von der dargestellten Konfiguration, in welcher das Aufbringungselement 27 und die Beschichtungselemente 12a, 12b zwischen der ersten Gruppe an Belichtungselementen 13a (Fig. 2 ― 10, rechts der Beschichtungseinrichtung 8) und der zweiten Gruppe an Belichtungselementen 13b (Fig. 2 ― 10, links der Beschichtungseinrichtung 8) angeordnet sind, erfolgt die Ausbildung einer Baumaterialschicht 9 bei Bewegung (vgl. Pfeil P1) des Trägerelements 16 ausgehend von der ersten Position (vgl. Fig. 2) in Richtung der zweiten Position (vgl. Fig. 6) über ein erstes (rechtes) Beschichtungselement 12a. Die Aufbringung von Baumaterial 2 in den zwischen den Beschichtungselement 12a, 12b gebildeten Zwischenraum erfolgt über das Aufbringungselement 27. In diesem Zusammenhang sind die Fig. 2 - 6 zu beachten, anhand welcher die horizontale Bewegung des Trägerelements 16 in Richtung des Pfeils P1 ausgehend von der in Fig. 2 gezeigten ersten Position in die in Fig. 6 gezeigte zweite Position ersichtlich ist. Die selektive Belichtung der ausgebildeten Baumaterialschicht 9 während der Bewegung des Trägerelements 16 in Richtung der zweiten Position erfolgt vermittels der der ersten Gruppe zugehörigen (rechten) Belichtungselemente 13a. In analoger Weise erfolgt die Ausbildung einer weiteren Baumaterialschicht 9 bei Bewegung des Trägerelements 16 ausgehend von der zweiten Position (vgl. Fig. 6) in Richtung der ersten Position (vgl. Fig. 2, 10) über ein zweites Beschichtungselement 12b. In diesem Zusammenhang sind die Fig. 6 - 10 zu beachten, anhand welcher die horizontale Bewegung des Trägerelements 16 in Richtung des Pfeils P2 ausgehend von der in Fig. 6 gezeigten zweiten Position (zurück) in die in Fig. 2, 10 gezeigte erste Position ersichtlich ist. Die selektive Belichtung der ausgebildeten Baumaterialschicht 9 während der Bewegung des Trägerelements 16 in Richtung der ersten Position erfolgt vermittels der der zweiten Gruppe zugehörigen (linken) Belichtungselemente 13b.

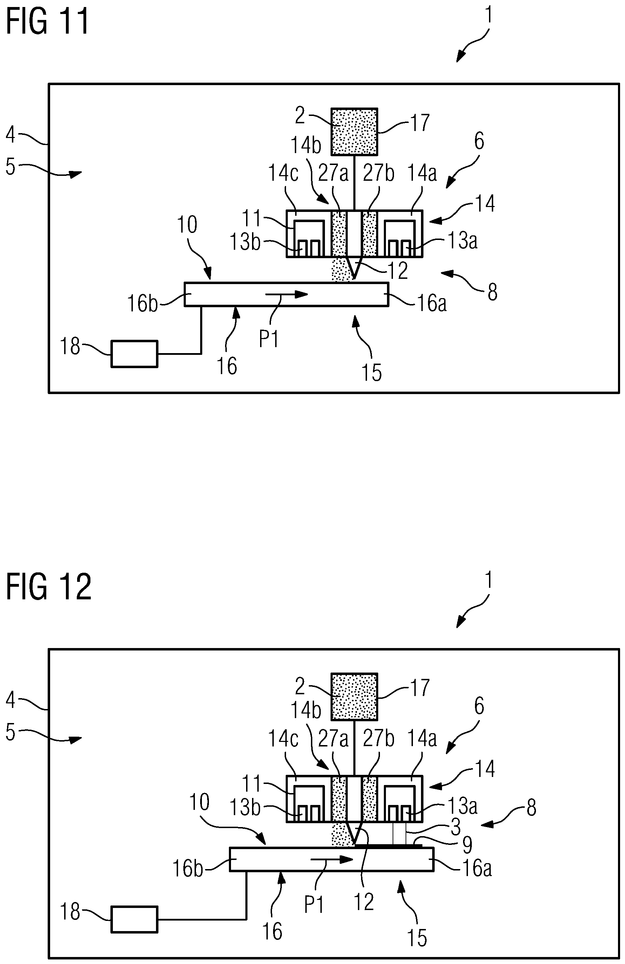

Die simultane Durchführung von Aufbringungs-, Beschichtungs- und Belichtungsvorgängen wird im Weiteren auch unter Bezugnahme auf die in den Fig. 11 - 19 gezeigten Prinzipdarstellungen näher erläutert. Gezeigt ist hier eine zweite beispielhafte Konfiguration der Beschichtungseinrichtung 8 mit mehreren benachbart angeordneten Aufbringungselementen 27a, 27b und einem einzigen zentrisch zwischen den Aufbringungselementen 27a, 27b angeordneten Beschichtungselement 12. Ein erstes Aufbringungselement 27a ist links des Beschichtungselements 12 und ein zweites Aufbringungselement 27b rechts des Beschichtungselements 12 angeordnet. Die Aufbringungselemente 27a, 27b sind jeweils dazu eingerichtet, eine bestimmte Baumaterialmenge seitlich benachbart zu dem zentrisch zwischen den Aufbringungselementen 27a, 27b angeordneten Beschichtungselement 12 auf die Bauebene 10 aufzubringen.

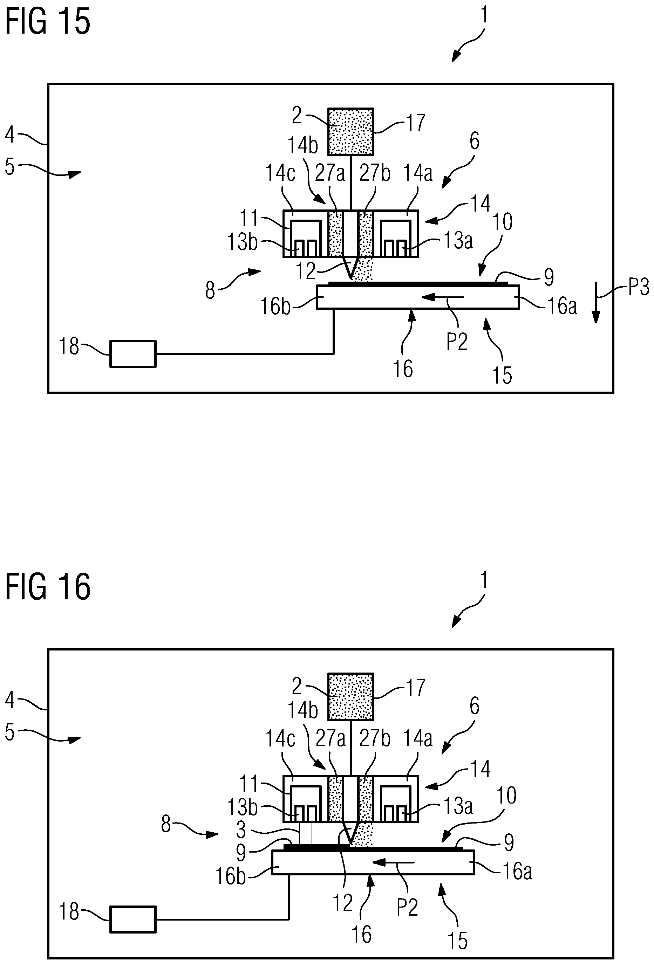

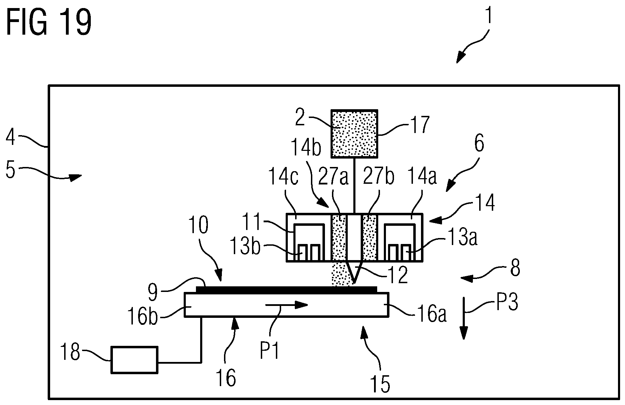

Das Trägerelement 16 ist wiederum zwischen einer ersten Position (vgl. Fig. 11), in welcher ein erster Trägerelementabschnitt 16a, d. h. z. B. ein einen ersten Endbereich (rechter Endbereich) des Trägerelements 16 bildender Trägerelementabschnitt 16a, unterhalb der dem ersten Aufbringungselement 27a angeordnet ist, und einer zweiten Position (vgl. Fig. 15), in welcher ein zweiter Trägerelementabschnitt 16b, d. h. z. B. ein einen zweiten Endbereich des Trägerelements 16 bildender Trägerelementabschnitt 16b, unterhalb dem zweiten Aufbringungselement 27b angeordnet ist, bewegbar gelagert. Um das in der ersten Position befindliche Trägerelement 16 in die zweite Position zu bewegen, erfolgt eine horizontale Bewegung des Trägerelements 16 nach rechts (vgl. Fig. 11 - 14, Pfeil P1). Umgekehrt erfolgt eine horizontale Bewegung des Trägerelements 16 nach links, um das in der zweiten Position befindliche Trägerelement 16 in die erste Position zu bewegen (vgl. Fig. 15 - 19, Pfeil P2). In Fig. 19 ist das Trägerelement 16 (wieder) in die erste Position bewegt. Selbstverständlich lassen sich die erste und die zweite Position tauschen; vorstehende Ausführungen gelten wiederum analog.

Ausgehend von der dargestellten Konfiguration, in welcher die Aufbringungselemente 27a, 27b und das Beschichtungselement 12 zwischen der ersten Gruppe an Belichtungselementen 13a (Fig. 11 - 19, rechts der Beschichtungseinrichtung 8) und der zweiten Gruppe an Belichtungselementen 13b (Fig. 11 - 19, links der Beschichtungseinrichtung 8) angeordnet sind, erfolgt die Aufbringung von Baumaterial 2 bei Bewegung (vgl. Pfeil P1) des Trägerelements 16 ausgehend von der ersten Position (vgl. Fig. 2) in Richtung der zweiten Position (vgl. Fig. 6) über das erste (linke) Aufbringungselement 27a. Die Ausbildung der Baumaterialschicht 9 erfolgt über das zentrische Beschichtungselement 12. In diesem Zusammenhang sind die Fig. 11 - 15 zu beachten, anhand welcher die horizontale Bewegung des Trägerelements 16 in Richtung des Pfeils P1 ausgehend von der in Fig. 11 gezeigten ersten Position in die in Fig. 15 gezeigte zweite Position ersichtlich ist. Die selektive Belichtung der ausgebildeten Baumaterialschicht 9 während der Bewegung des Trägerelements 16 in Richtung der zweiten Position erfolgt vermittels der der ersten Gruppe zugehörigen (rechten) Belichtungselemente 13a. In analoger Weise erfolgt die zur Ausbildung einer weiteren Baumaterialschicht 9 erforderliche Aufbringung weiteren Baumaterials 2 bei Bewegung des Trägerelements 16 ausgehend von der zweiten Position (vgl. Fig. 15) in Richtung der ersten Position (vgl. Fig. 11, 19) über das zweite (rechte) Aufbringungselement 27b. Die Ausbildung der Baumaterialschicht 9 erfolgt wiederum über das zentrische Beschichtungselement 12. In diesem Zusammenhang sind die Fig. 15 - 19 zu beachten, anhand welcher die horizontale Bewegung des Trägerelements 16 in Richtung des Pfeils P2 ausgehend von der in Fig. 15 gezeigten zweiten Position (zurück) in die in Fig. 11, 19 gezeigte erste Position ersichtlich ist. Die selektive Belichtung der ausgebildeten Baumaterialschicht 9 während der Bewegung des Trägerelements 16 in Richtung der ersten Position erfolgt vermittels der der zweiten Gruppe zugehörigen (linken) Belichtungselemente 13b.

Wesentlich für den additiven Herstellungsprozess ist in allen Fällen, dass das in die zweite Position bewegte Trägerelement 16 bevor es zurück in die erste Position bewegt wird, wie in den Fig. 6, 15 durch den Pfeil P3 angedeutet, um ein bestimmtes Maß in vertikaler Richtung bewegt, d. h. abgesenkt, wird. Diese vertikale Bewegung (Absenken) des Trägerelements 16 ermöglicht die Ausbildung einer weiteren selektiv zu verfestigenden Baumaterialschicht 9 auf einer zuvor selektiv verfestigten Baumaterialschicht 9 und die selektive Belichtung dieser Baumaterialschicht 9 während der Bewegung des Trägerelements 16 zurück in die erste Position. In analoger Weise wird das in die erste Position zurückbewegte Trägerelement 16 um ein bestimmtes Maß in vertikaler Richtung bewegt, d. h. abgesenkt. Diese vertikale Bewegung des Trägerelements 16 ermöglicht die Ausbildung einer weiteren selektiv zu verfestigenden Baumaterialschicht 9 auf der zuvor selektiv verfestigten Baumaterialschicht 9 und die selektive Belichtung dieser Baumaterialschicht 9 während der Bewegung des Trägerelements 16 zurück in die zweite Position.

Insgesamt kann bei jeder horizontalen Bewegung des Trägerelements 16 relativ zu der Baugruppe 6, d. h. unabhängig davon, ob dieses in Richtung der ersten oder zweiten Position bewegt wird, simultan ein Aufbringungs-, Beschichtungs- und ein Belichtungsvorgang durchgeführt werden ("Plotter-Prinzip").

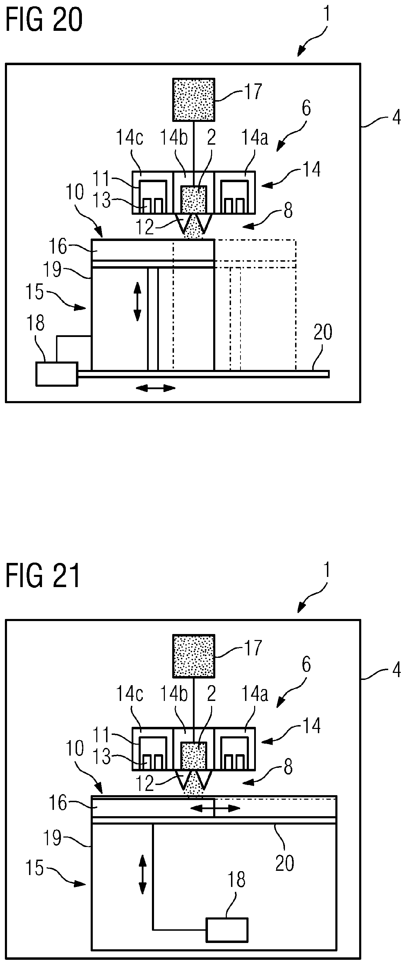

Die Fig. 20, 21 zeigen jeweils eine Prinzipdarstellung einer Vorrichtung 1 gemäß einem weiteren Ausführungsbeispiel. Anhand der in den Fig. 20, 21 gezeigten Ausführungsbeispiele sind unterschiedliche Varianten zur Realisierung jeweiliger Bewegungen des Trägerelements 16 in der horizontal ausgerichteten Bewegungsebene relativ zu der Baugruppe 6 ersichtlich.

In der in Fig. 20 gezeigten ersten Variante ist das Trägerelement 16 in einer in horizontaler Richtung bewegbar gelagerten, modulartigen Gehäusestruktur 19 ("Baucontainer") der Trägereinrichtung 15 angeordnet. Die modulartige Gehäusestruktur 19 ist in der horizontal ausgerichteten Bewegungsebene relativ zu der lagefesten Baugruppe 6 bewegbar gelagert. Es ist also nicht das Trägerelement 16 selbst, sondern die gesamte modulartige Gehäusestruktur 19 in welcher das Trägerelement 16 angeordnet ist, in horizontaler Richtung relativ zu der Baugruppe 6 bewegbar gelagert. Bewegungen des Trägerelements 16 relativ zu der Baugruppe 6 ergeben sich sonach durch Bewegungen der modulartigen Gehäusestruktur 19 relativ zu der Baugruppe 6. Das Trägerelement 16 ist in horizontaler Richtung lagefest in der modulartigen Gehäusestruktur 19 angeordnet.

Zum Antrieb, d. h. zur Versetzung der modulartigen Gehäusestruktur 19 in eine Bewegung in der horizontal ausgerichteten Bewegungsebene relativ zu der Baugruppe 6, umfasst die Vorrichtung 1 eine Antriebseinrichtung 18. Die Antriebseinrichtung 18 ist mit der modulartigen Gehäusestruktur 19 gekoppelt und zur Erzeugung einer die modulartige Gehäusestruktur 19 in der horizontal ausgerichteten Bewegungsebene relativ zu der Baugruppe bewegenden Antriebskraft eingerichtet. Die Antriebseinrichtung 18 kann als Linearantrieb ausgebildet sein. Konkret kann die Antriebseinrichtung 18 z. B. als Kurbel- oder Spindeltrieb ausgebildet sein. Zur Realisierung einer geführten Bewegung der modulartigen Gehäusestruktur 19 in der horizontalen Bewegungsebene bzw. - bahn kann eine, z. B. schienenartige, Führungseinrichtung 20 in der vorrichtungsseitigen Gehäusestruktur 4 angeordnet oder ausgebildet sein.

In der in Fig. 21 gezeigten Variante ist das Trägerelement 16 in einer lagefest relativ zu der Baugruppe 6 angeordneten oder ausgebildeten, modulartigen Gehäusestruktur 19 der Trägereinrichtung 15 angeordnet. Hier ist also das Trägerelement 16 in(nerhalb) der modulartigen Gehäusestruktur 19 in der horizontal ausgerichteten Bewegungsebene relativ zu der Baugruppe 6 bewegbar gelagert. Das Trägerelement 16 ist also selbst in horizontaler Richtung relativ zu der Baugruppe 6 bewegbar gelagert. Bewegungen des Trägerelements 16 relativ zu der Baugruppe 6 ergeben sich sonach durch tatsächliche Bewegungen des Trägerelements 16 innerhalb der und relativ zu der modulartigen Gehäusestruktur 19. Die modulartige Gehäusestruktur 19 ist in horizontaler Richtung lagefest an oder in der vorrichtungsseitigen Gehäusestruktur 4 angeordnet.

Zum Antrieb, d. h. zur Versetzung des Trägerelements 16 in eine Bewegung in der horizontal ausgerichteten Bewegungsebene relativ zu der Baugruppe 6 umfasst die modulartige Gehäusestruktur 19 eine Antriebseinrichtung 18. Die Antriebseinrichtung 18 ist mit dem Trägerelement 16 gekoppelt und zur Erzeugung einer das Trägerelement 16 in der horizontal ausgerichteten Bewegungsebene relativ zu der Baugruppe 6 bewegenden Antriebskraft eingerichtet. Die Antriebseinrichtung 18 kann auch hier als Linearantrieb ausgebildet sein. Sonach kann die Antriebseinrichtung 18 auch hier z. B. als Kurbel- oder Spindeltrieb ausgebildet sein. Zur Realisierung einer geführten Bewegung des Trägerelements 16 in der horizontalen Bewegungsebene bzw. - bahn kann eine, z. B. schienenartige, Führungseinrichtung 20 in der modulartigen Gehäusestruktur 19 angeordnet oder ausgebildet sein. Die Führungseinrichtung 20 kann in vertikaler Richtung bewegbar gelagert sein, um ein Absenken des Trägerelements 16 zu realisieren.

Für die in den Fig. 20, 21 gezeigten Varianten gilt gleichermaßen, dass die modulartige Gehäusestruktur 19 nach Art eines Wechselbehälters aus der vorrichtungsseitigen Gehäusestruktur 4 entnehmbar ist. Die modulartige Gehäusestruktur 19 bzw. die Trägereinrichtung 15 lässt sich sonach bedarfsweise aus der vorrichtungsseitigen Gehäusestruktur 4 entnehmen und bedarfsweise an der vorrichtungsseitigen Gehäusestruktur 4 befestigen.

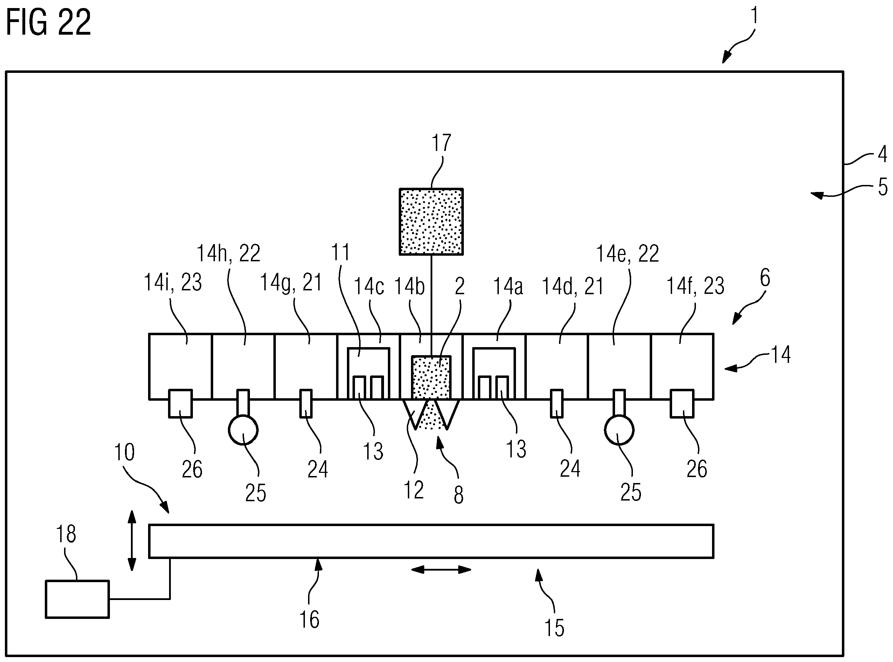

Fig. 22 zeigt eine Prinzipdarstellung einer Vorrichtung 1 gemäß einem weiteren Ausführungsbeispiel. Anhand des in Fig. 22 gezeigten Ausführungsbeispiels ist ersichtlich, dass in der Aufnahmestruktur 14, d. h. in jeweiligen hierfür vorgesehenen Aufnahmeabteilen 14a - 14i, zusätzlich Funktionselemente weiterer Funktionskomponenten der Vorrichtung 1 angeordnet oder ausgebildet und somit baulich integriert in der Aufnahmestruktur 14 angeordnet oder ausgebildet sein können. Eine entsprechende Anordnung oder Ausbildung jeweiliger Funktionselemente weiterer Funktionskomponenten der Vorrichtung 1 bedingt gleichermaßen, dass auch diese weiteren Funktionselemente lage- bzw. ortsfest an der vorrichtungsseitigen Gehäusestruktur 4 angeordnet oder ausgebildet sind.

Bei entsprechenden weiteren Funktionskomponenten der Vorrichtung 1 handelt es sich bei dem in Fig. 22 gezeigten Ausführungsbeispiel um eine Absaugeinrichtung 21, eine Glättungs- und/oder Ebnungseinrichtung 22 und um eine Erfassungseinrichtung 23. Ersichtlich sind die genannten Funktionskomponenten der Vorrichtung 1 respektive die diesen zugehörigen Funktionselemente bezüglich der mittig angeordneten Beschichtungseinrichtung 8 in einer symmetrischen und somit redundanten Anordnung vorhanden.

Die Absaugeinrichtung 21 ist zur Absaugung von sich bauprozessbedingt aus einer Baumaterialschicht 9 gelöstem Baumaterial 2 ("Schweißspritzer") und/oder zur Absaugung von bauprozessbedingt entstehenden Prozessgasen eingerichtet. Die Absaugeinrichtung 21 umfasst Absaugelemente 24, vermittels welchen eine Saugströmung ausbildbar ist, welche ein Entfernen von sich bauprozessbedingt aus einer Baumaterialschicht 9 gelöstem Baumaterial und/oder zur Absaugung von bauprozessbedingt entstehenden Prozessgasen ermöglicht. Die Absaugelemente 24 sind in den benachbart zu den die Belichtungselemente 13 aufnehmenden Aufnahmeabteilen 14a, 14c angeordneten Aufnahmeabteilen 14d, 14g angeordnet.

Die Glättungs- und/oder Ebnungseinrichtung 22 ist zur Glättung und/oder Ebnung selektiv verfestigter Baumaterialschichten 9 eingerichtet. Die Glättungs- und/oder Ebnungseinrichtung 22 umfasst Glättungs- und/oder Ebnungselemente 25, vermittels welchen sie mechanisch auf eine selektiv verfestigte Baumaterialschicht 9 einwirken kann, um bauprozessbedingt in der Baumaterialschicht 9 entstandene Unebenheiten, d. h. z. B. kraterartige Erhebungen, zu entfernen, d. h. die Baumaterialschicht 9, zu glätten bzw. zu ebnen, bevor auf dieser eine weitere Baumaterialschicht 9 ausgebildet wird. Die Glättungs- und/oder Ebnungselemente 25 sind z. B. als rotierbar antreibbare Schleifelemente ("Schleifwalzen") ausgebildet. Die Glättungs- und/oder Ebnungselemente 25 sind in den benachbart zu den die Absaugelemente 24 aufnehmenden Aufnahmeabteilen 14d, 14g angeordneten Aufnahmeabteilen 14e, 14h angeordnet.

Die Erfassungseinrichtung 23 ist zur Erfassung wenigstens einer die Güte einer zu verfestigenden und/oder einer selektiv verfestigten Baumaterialschicht 9, d. h. insbesondere deren Oberfläche, beschreibenden Erfassungsgröße eingerichtet. Die Erfassungseinrichtung 23 umfasst Erfassungselemente 26, vermittels welchen Bilddaten einer zu verfestigenden und/oder einer selektiv verfestigten Baumaterialschicht 9 aufgenommen werden können. Die Erfassungselemente 26 sind als optische Bildaufnahmeelemente, insbesondere als Kameras, ausgebildet. Die Erfassungselemente 26 sind in den benachbart zu den die Glättungs- und/oder Ebnungselemente 25 aufnehmenden Aufnahmeabteilen 14e, 14h angeordneten Aufnahmeabteilen 14 f, 14i angeordnet.

Vermittels den Erfassungselementen 26 aufgenommene Bilddaten sind vermittels geeigneter Auswertealgorithmen qualitativ oder quantitativ im Hinblick auf bestimmte die Güte der Baumaterialschicht 9 beschreibende Erfassungsgrößen auswertbar. Bei entsprechenden Erfassungsgrößen kann es sich um die Güte der Baumaterialschicht 9 beeinflussende Merkmale, d. h. z. B. Unebenheiten, wie z. B. kraterartige Erhebungen, Unregelmäßigkeiten, etc., einer Baumaterialschicht 9 handeln. Die aufgenommenen und gegebenenfalls entsprechend ausgewerteten Bilddaten sind vermittels geeigneter Visualisierungsalgorithmen visualisierbar, sodass sich ein zwei- oder dreidimensionales (topologisches) Abbild, insbesondere der Oberfläche, einer Baumaterialschicht 9, erstellen und auf einer geeigneten Anzeigeeinrichtung (nicht gezeigt), welche gegebenenfalls einen Bestandteil der Vorrichtung 1 bildet, anzeigen lässt.

Für alle in den Fig. gezeigten Ausführungsbeispiele gilt, dass das Trägerelement 16, gegebenenfalls die gesamte Trägereinrichtung 15, von der vorrichtungsseitigen Gehäusestruktur 4 schwingungsentkoppelt sein kann. Derart ist die Einbringung von auf bei Bewegungen des Trägerelements 16 relativ zu der Baugruppe 6 erzeugten Schwingungen und eine damit einhergehende mögliche Beeinträchtigung von Belichtungsvorgängen unterbunden. Die Schwingungsentkopplung ist vermittels geeigneter zwischen das Trägerelement 16 bzw. die Trägereinrichtung 15 und die Baugruppe 6 geschalteter Entkopplungselemente (nicht näher bezeichnet) bzw. -strukturen, d. h. z. B. Elastomorelemente bzw. -strukturen, realisiert.

Über die in den Fig. gezeigten Vorrichtungen 1 lässt sich jeweils ein Verfahren zur additiven Herstellung eines dreidimensionalen Objekts durch sukzessive schichtweise selektive Verfestigung einzelner Baumaterialschichten aus verfestigbarem Baumaterial 2 vermittels wenigstens eines Energiestrahls 3 realisieren. Bei dem Verfahren kann es sich um ein selektives Laserschmelzverfahren (SLM-Verfahren) oder um ein selektives Lasersinterverfahren (SLS-Verfahren) handeln.

Einzelne, mehrere oder sämtliche der mit Bezug auf ein bestimmtes Ausführungsbeispiel gezeigten Merkmale lassen sich auf wenigstens ein anderes Ausführungsbeispiel übertragen.

Einzelne Merkmale der Erfindung sind in den nachfolgenden Klauseln wiedergegeben:
1. Vorrichtung (1) zur additiven Herstellung eines dreidimensionalen Objekts durch sukzessive schichtweise selektive Belichtung und damit einhergehende selektive Verfestigung von in einer Bauebene (10) ausgebildeten Baumaterialschichten (9) aus verfestigbarem Baumaterial (2) vermittels wenigstens eines Energiestahls (3), umfassend eine Gehäusestruktur (4), gekennzeichnet durch eine lagefest an der vorrichtungsseitigen Gehäusestruktur (4) angeordnete oder ausgebildete kombinierte Beschichtungs- und Belichtungsbaugruppe (6), welche eine Beschichtungseinrichtung (8), die zur Aufbringung von Baumaterial (2) in die Bauebene (10) und zur Ausbildung zu verfestigender Baumaterialschichten (9) in der Bauebene (10) eingerichtet ist, und eine Belichtungseinrichtung (11), die zur selektiven Belichtung jeweiliger vermittels der Beschichtungseinrichtung (8) in der Bauebene (10) ausgebildeter Baumaterialschichten (9) eingerichtet ist, umfasst, und eine Trägereinrichtung (15), welche wenigstens ein die Bauebene (10) umfassendes, in einer horizontal ausgerichteten Bewegungsebene relativ zu der kombinierten Beschichtungs- und Belichtungsbaugruppe (6) bewegbar gelagertes Trägerelement (16) umfasst.
2. Vorrichtung nach Aspekt 1, wobei das Trägerelement (16) an oder in einer bewegbar gelagerten, modulartigen Gehäusestruktur (19) der Trägereinrichtung (15) angeordnet oder ausgebildet ist, wobei die modulartige Gehäusestruktur (19) in der horizontal ausgerichteten Bewegungsebene relativ zu der kombinierten Beschichtungs- und Belichtungsbaugruppe (6) bewegbar gelagert ist, oder das Trägerelement (16) an oder in einer lagefest relativ zu der kombinierten Beschichtungs- und Belichtungsbaugruppe (6) angeordneten oder ausgebildeten, modulartigen Gehäusestruktur (19) der Trägereinrichtung (15) angeordnet oder ausgebildet ist, wobei das Trägerelement (16) an oder in der modulartigen Gehäusestruktur (19) in der horizontal ausgerichteten Bewegungsebene relativ zu der kombinierten Beschichtungs- und Belichtungsbaugruppe (6) bewegbar gelagert ist.
3. Vorrichtung nach Aspekt 2, umfassend wenigstens eine mit der modulartigen Gehäusestruktur (19) der Trägereinrichtung (15) oder dem Trägerelement (16) koppelbare oder gekoppelte Antriebseinrichtung (18), welche zur Erzeugung einer die modulartige Gehäusestruktur (19) oder das Trägerelement (16) in der horizontal ausgerichteten Bewegungsebene relativ zu der kombinierten Beschichtungs- und Belichtungsbaugruppe (6) bewegenden Antriebskraft eingerichtet ist.
4. Vorrichtung nach einem der vorhergehenden Aspekte, umfassend eine lagefest an der vorrichtungsseitigen Gehäusestruktur (4) angeordnete oder ausgebildete Absaugeinrichtung (21), welche zur Absaugung von sich bauprozessbedingt aus einer Baumaterialschicht (9) gelöstem Baumaterial und/oder zur Absaugung von bauprozessbedingt entstehenden Prozessgasen eingerichtet ist; und/oder eine lagefest an der vorrichtungsseitigen Gehäusestruktur (4) angeordnete oder ausgebildete Glättungs- und/oder Ebnungseinrichtung (22), welche zur zumindest abschnittsweisen Glättung und/oder Ebnung einer selektiv verfestigten Baumaterialschicht eingerichtet ist, und/oder eine lagefest an der vorrichtungsseitigen Gehäusestruktur (4) angeordnete oder ausgebildete Erfassungseinrichtung (23), welche zur Erfassung wenigstens einer die Güte einer zu verfestigenden und/oder einer selektiv verfestigten Baumaterialschicht (9) beschreibenden Erfassungsgröße eingerichtet ist.
5. Vorrichtung nach einem der vorhergehenden Aspekte, wobei eine an der vorrichtungsseitigen Gehäusestruktur (4) befestigte Aufnahmestruktur (14), in welcher wenigstens die Beschichtungseinrichtung (8) und die Belichtungseinrichtung (11), sowie gegebenenfalls zusätzlich die Absaugeinrichtung (21) und/oder die Glättungs- und/oder Ebnungseinrichtung (22) und/oder die Erfassungseinrichtung (23) baulich integriert angeordnet oder ausgebildet sind.
6. Vorrichtung nach Aspekt 5, wobei die Aufnahmestruktur (14) mehrere gesonderte Aufnahmeabteile (14a - 14i) umfasst, wobei jeweilige der Beschichtungseinrichtung (8) zugehörige Funktionselemente, insbesondere Beschichtungselemente (12, 12a, 12b), und jeweilige der Belichtungseinrichtung (11) zugehörige Funktionselemente, insbesondere Belichtungselemente (13, 13a, 13b), sowie gegebenenfalls jeweilige der Absaugeinrichtung (21) zugehörige Funktionselemente, insbesondere Absaugelemente (24), und/oder jeweilige der Glättungs- und/oder Ebnungseinrichtung (22) zugehörige Glättungs- und/oder Ebnungselemente (25) und/oder jeweilige der Erfassungseinrichtung (23) zugehörige Erfassungselemente (26) in diesen jeweils zugeordneten gesonderten Aufnahmeabteilen (14a - 14i) anordenbar oder angeordnet sind.
7. Vorrichtung nach Aspekt 6, wobei jeweilige Aufnahmeabteile (14a - 14i) unter Ausbildung der Aufnahmestruktur (14) lösbar miteinander verbindbar oder verbunden sind.
8. Vorrichtung nach einem der vorhergehenden Aspekte, wobei die Belichtungseinrichtung (11) mehrere, insbesondere zu mehreren Gruppen zusammengefasste, Belichtungselemente (13, 13a, 13b), welche jeweils zur Erzeugung eines Energiestrahls (3) zur selektiven Belichtung einer selektiv zu verfestigenden Baumaterialschicht (9) eingerichtet sind, umfasst, wobei die Beschichtungseinrichtung (8) zwischen einer ersten Anzahl an Belichtungselementen (13, 13a, 13b), insbesondere einer ersten Gruppe mehrerer Belichtungselemente (13, 13a, 13b), und einer zweiten Anzahl an Belichtungselementen (13, 13a, 13b), insbesondere einer zweiten Gruppe mehrerer Belichtungselemente (13, 13a, 13b), angeordnet oder ausgebildet ist.
9. Vorrichtung nach einem der vorhergehenden Aspekte, wobei die Beschichtungseinrichtung (8) mehrere benachbart angeordnete Aufbringungselemente (27, 27a, 27b) und ein, insbesondere klingenartiges bzw. - förmiges, Beschichtungselement (12) umfasst, wobei die Aufbringungselemente (27, 27a, 27b) dazu eingerichtet sind, eine bestimmte Baumaterialmenge seitlich benachbart zu dem Beschichtungselement (12) auf die Bauebene (10) aufzubringen, oder
   die Beschichtungseinrichtung (8) mehrere benachbart angeordnete, insbesondere klingenartige bzw. -förmige, Beschichtungselemente (12, 12a, 12b) und ein Aufbringungselement (27) umfasst, wobei das Aufbringungselement (27) dazu eingerichtet ist, eine bestimmte Baumaterialmenge zwischen wenigstens zwei Beschichtungselemente (12, 12a, 12b) auf die Bauebene (10) aufzubringen.
10. Vorrichtung nach einem der vorhergehenden Aspekte, wobei das Trägerelement (16) zwischen einer ersten Position, in welcher ein erster Trägerelementabschnitt (16a), insbesondere ein ein erstes Ende des Trägerelements (16) bildender Trägerelementabschnitt (16a), unterhalb der Beschichtungseinrichtung (8) angeordnet ist,
   und einer zweiten Position, in welcher ein zweiter Trägerelementabschnitt (16b), insbesondere ein ein zweites Ende des Trägerelements (16) bildender Trägerelementabschnitt (16b), unterhalb der Beschichtungseinrichtung (8) angeordnet ist, bewegbar gelagert ist.
11. Vorrichtung nach einem der Aspekte 8 bis 10, wobei die Beschichtungseinrichtung (8) mehrere benachbart angeordnete, insbesondere klingenartige bzw. -förmige, Beschichtungselemente (12, 12a, 12b) und ein Aufbringungselement (27) umfasst, wobei das Aufbringungselement (27) dazu eingerichtet ist, eine bestimmte Baumaterialmenge zwischen wenigstens zwei Beschichtungselemente (12, 12a, 12b) auf die Bauebene (10) aufzubringen, wobei die Ausbildung einer Baumaterialschicht (9) bei Bewegung des Trägerelements (16) ausgehend von der ersten Position in Richtung der zweiten Position über ein erstes Beschichtungselement (12a) und die Belichtung der ausgebildeten Baumaterialschicht (9) während der Bewegung des Trägerelements (16) in Richtung der zweiten Position vermittels wenigstens eines der ersten Anzahl zugehörigen Belichtungselements (13a) erfolgt, und
   die Ausbildung einer Baumaterialschicht (9) bei Bewegung des Trägerelements (16) ausgehend von der zweiten Position in Richtung der ersten Position über ein zweites Beschichtungselement (12b) und die Belichtung der ausgebildeten Baumaterialschicht (9) während der Bewegung des Trägerelements (16) in Richtung der ersten Position vermittels wenigstens eines der zweiten Anzahl zugehörigen Belichtungselements (13b) erfolgt.
12. Vorrichtung nach einem der Aspekte 8 bis 10, wobei die Beschichtungseinrichtung (8) mehrere benachbart angeordnete Aufbringungselemente (27, 27a, 27b) und ein, insbesondere klingenartiges bzw. - förmiges, Beschichtungselement (12) umfasst, wobei die Aufbringungselemente (27, 27a, 27b) dazu eingerichtet sind, eine bestimmte Baumaterialmenge seitlich benachbart zu dem Beschichtungselement (12) auf die Bauebene (10) aufzubringen, wobei die Aufbringung von Baumaterial (2) auf die Bauebene (10) bei Bewegung des Trägerelements (16) ausgehend von der ersten Position in Richtung der zweiten Position über ein erstes Aufbringungselement (27a) und die Belichtung der vermittels des Beschichtungselements (12) ausgebildeten Baumaterialschicht (9) während der Bewegung des Trägerelements (16) in Richtung der zweiten Position vermittels wenigstens eines der ersten Anzahl zugehörigen Belichtungselements (13a) erfolgt, und
   die Aufbringung von Baumaterial (2) auf die Bauebene (10) bei Bewegung des Trägerelements (16) ausgehend von der zweiten Position in Richtung der ersten Position über ein zweites Aufbringungselement (27b) und die Belichtung der vermittels des Beschichtungselements (12) ausgebildeten Baumaterialschicht (9) während der Bewegung des Trägerelements (16) in Richtung der ersten Position vermittels wenigstens eines der zweiten Anzahl zugehörigen Belichtungselements (13b) erfolgt.
13. Vorrichtung nach einem der Aspekte 10 bis 12, wobei das Trägerelement (16), insbesondere in der ersten Position und in der zweiten Position, vertikal bewegbar gelagert ist.
14. Vorrichtung nach einem der vorhergehenden Aspekte, wobei wenigstens das Trägerelement (16), gegebenenfalls die gesamte Trägereinrichtung (15), von der vorrichtungsseitigen Gehäusestruktur (4) schwingungsentkoppelt ist.
15. Vorrichtung nach einem der vorhergehenden Aspekte, umfassend eine der Beschichtereinrichtung (8), insbesondere einem der Beschichtereinrichtung (8) zugehörigen Aufbringungselement (27, 27a, 27b) zuordenbare oder zugeordnete Bevorratungseinrichtung (17), welche zur Bevorratung von Baumaterial (2) eingerichtet ist, wobei die Bevorratungseinrichtung (17) derart mit der Beschichtungseinrichtung (8) verbindbar oder verbunden ist, dass über die Bevorratungseinrichtung (17) diskontinuierlich oder kontinuierlich eine bestimmte Menge an Baumaterial (2) zu der Beschichtungseinrichtung (8) zuführbar ist.
16. Vorrichtung nach einem der vorhergehenden Aspekte, wobei ein Belichtungselement (10) als ein Laserdiodenelement oder als ein mit einem Laserdiodenelement koppelbares oder gekoppeltes, insbesondere linsenförmiges, optisches Element oder als ein Scannerelement als Teil einer optischen Scannereinrichtung ausgebildet ist oder wenigstens eines der genannten Elemente umfasst.
17. Verfahren zur additiven Herstellung wenigstens eines dreidimensionalen Objekts durch sukzessive schichtweise selektive Belichtung und damit einhergehende Verfestigung einzelner Baumaterialschichten (9) aus verfestigbarem Baumaterial (2) vermittels wenigstens eines Energiestahls (3), wobei zur additiven Herstellung des wenigstens einen dreidimensionalen Objekts eine Vorrichtung (1) zur additiven Herstellung wenigstens eines dreidimensionalen Objekts nach einem der vorhergehenden Aspekte verwendet wird.

## Patentansprüche

1. Vorrichtung zur additiven Herstellung eines dreidimensionalen Objekts durch sukzessive schichtweise selektive Belichtung und damit einhergehende selektive Verfestigung von in einer Bauebene (10) ausgebildeten Baumaterialschichten (9) aus verfestigbarem Baumaterial (2) vermittels wenigstens eines Energiestahls (3), wobei die Vorrichtung (1) umfasst:
- eine Gehäusestruktur (4);
- eine Anordnung, welche an der Gehäusestruktur (4) der Vorrichtung (1) angeordnet oder ausgebildet ist, wobei die Anordnung umfasst:
eine Beschichtungseinrichtung (8), die zur Aufbringung von Baumaterial (2) in die Bauebene (10) und zur Ausbildung zu verfestigender Baumaterialschichten (9) in der Bauebene (10) eingerichtet ist, wobei die Beschichtungseinrichtung (8) umfasst:
ein erstes Aufbringungselement (27, 27a, 27b);
ein zu dem ersten Aufbringungselement (27, 27a, 27b) benachbart angeordnetes zweites Aufbringungselement (27, 27a, 27b); und
ein zwischen dem ersten Aufbringungselement (27, 27a, 27b) und dem zweiten Aufbringungselement (27, 27a, 27b) angeordnetes Beschichtungselement (12); und
eine Belichtungseinrichtung (11), die zur selektiven Belichtung jeweiliger vermittels der Beschichtungseinrichtung (8) in der Bauebene (10) ausgebildeter Baumaterialschichten (9) eingerichtet ist;
eine Trägereinrichtung (15), welche wenigstens ein die Bauebene (10) umfassendes Trägerelement (16) umfasst; wobei
die ersten und zweiten Aufbringungselemente (27, 27a, 27b) jeweils eingerichtet sind, eine bestimmte Menge an Baumaterial auf die Bauebene (10) seitlich benachbart zu dem Beschichtungselement (12) aufzubringen.

2. Vorrichtung nach Anspruch 1, wobei das Trägerelement (16) in einer horizontal ausgerichteten Bewegungsebene relativ zu der Anordnung bewegbar gelagert ist.

3. Vorrichtung nach Anspruch 1 oder 2, wobei die Aufbringung von Baumaterial auf die Bauebene (10) ausführbar ist: mit dem ersten Aufbringungselement (27, 27a, 27b) wenn das Trägerelement (16) von einer ersten Position in Richtung einer zweiten Position bewegt wird, und mit dem zweiten Aufbringungselement (27, 27a, 27b) wenn das Trägerelement (16) von der zweiten Position in Richtung der ersten Position bewegt wird.

4. Vorrichtung nach Anspruch 3, wobei das Trägerelement (16) an oder in einer bewegbar gelagerten, modulartigen Gehäusestruktur (19) der Trägereinrichtung (15) angeordnet oder ausgebildet ist, wobei die modulartige Gehäusestruktur (19) in der horizontal ausgerichteten Bewegungsebene relativ zu der Anordnung bewegbar gelagert ist.

5. Vorrichtung nach Anspruch 4, ferner umfassend wenigstens eine mit der modulartigen Gehäusestruktur (19) der Trägereinrichtung (15) oder dem Trägerelement (16) koppelbare oder gekoppelte Antriebseinrichtung (18), welche zur Erzeugung einer die modulartige Gehäusestruktur (19) oder das Trägerelement (16) in der horizontal ausgerichteten Bewegungsebene relativ zu der Anordnung bewegenden Antriebskraft eingerichtet ist.

6. Vorrichtung nach einem der vorhergehenden Ansprüche, ferner wenigstens umfassend: eine, insbesondere lagefest, an der vorrichtungsseitigen Gehäusestruktur (4) angeordnete oder ausgebildete Absaugeinrichtung (21), welche zur Absaugung von sich bauprozessbedingt aus einer Baumaterialschicht (9) gelöstem Baumaterial und/oder zur Absaugung von bauprozessbedingt entstehenden Prozessgasen eingerichtet ist; und/oder eine, insbesondere lagefest, an der vorrichtungsseitigen Gehäusestruktur (4) angeordnete oder ausgebildete Glättungs- und/oder Ebnungseinrichtung (22), welche zur zumindest abschnittsweisen Glättung und/oder Ebnung einer selektiv verfestigten Baumaterialschicht eingerichtet ist, und/oder eine, insbesondere lagefest, an der vorrichtungsseitigen Gehäusestruktur (4) angeordnete oder ausgebildete Erfassungseinrichtung (23), welche zur Erfassung wenigstens einer die Güte einer zu verfestigenden und/oder einer selektiv verfestigten Baumaterialschicht (9) beschreibenden Erfassungsgröße eingerichtet ist.

7. Vorrichtung nach einem der vorhergehenden Ansprüche, ferner umfassend eine an der vorrichtungsseitigen Gehäusestruktur (4) befestigte Aufnahmestruktur (14), in welcher wenigstens die Beschichtungseinrichtung (8) und die Belichtungseinrichtung (11), sowie gegebenenfalls zusätzlich die Absaugeinrichtung (21) und/oder die Glättungs- und/oder Ebnungseinrichtung (22) und/oder die Erfassungseinrichtung (23) baulich integriert angeordnet oder ausgebildet sind.

8. Vorrichtung nach Anspruch 7, wobei die Aufnahmestruktur (14) mehrere gesonderte Aufnahmeabteile (14a - 14i) umfasst, wobei jeweilige der Beschichtungseinrichtung (8) zugehörige Funktionselemente, insbesondere Beschichtungselemente (12, 12a, 12b), und jeweilige der Belichtungseinrichtung (11) zugehörige Funktionselemente, insbesondere Belichtungselemente (13, 13a, 13b), sowie gegebenenfalls jeweilige der Absaugeinrichtung (21) zugehörige Funktionselemente, insbesondere Absaugelemente (24), und/oder jeweilige der Glättungs- und/oder Ebnungseinrichtung (22) zugehörige Glättungs- und/oder Ebnungselemente (25) und/oder jeweilige der Erfassungseinrichtung (23) zugehörige Erfassungselemente (26) in diesen jeweils zugeordneten gesonderten Aufnahmeabteilen (14a - 14i) anordenbar oder angeordnet sind.

9. Vorrichtung nach Anspruch 8, wobei die Aufnahmeabteile (14a - 14i) unter Ausbildung der Aufnahmestruktur (14) lösbar miteinander verbindbar oder verbunden sind.

10. Vorrichtung nach einem der vorhergehenden Ansprüche, wobei die Belichtungseinrichtung (11) mehrere, insbesondere zu mehreren Gruppen zusammengefasste, Belichtungselemente (13, 13a, 13b), welche jeweils zur Erzeugung eines Energiestrahls (3) zur selektiven Belichtung einer selektiv zu verfestigenden Baumaterialschicht (9) eingerichtet sind, umfasst, wobei die Beschichtungseinrichtung zwischen einer ersten Anzahl an Belichtungselementen und einer zweiten Anzahl an Belichtungselementen angeordnet oder ausgebildet ist.

11. Vorrichtung nach einem der vorhergehenden Ansprüche, wobei die Beschichtungseinrichtung mehrere benachbart angeordnete Beschichtungselemente und wenigstens ein weiteres Aufbringungselement umfasst, welches eingerichtet ist, eine bestimmte Menge an Baumaterial zwischen die wenigstens zwei Aufbringungselemente auf die Bauebene aufzubringen, wobei die Aufbringungselemente und/oder die Beschichtungselemente optional in einer definierten Position relativ zu der Bauebene angeordnet sind.

12. Vorrichtung nach einem der vorhergehenden Ansprüche, wobei das Trägerelement (16) in vertikaler Richtung bewegbar gelagert ist.

13. Vorrichtung nach einem der vorhergehenden Ansprüche, wobei das Trägerelement, gegebenenfalls die gesamte Trägereinrichtung, von der vorrichtungsseitigen Gehäusestruktur schwingungsentkoppelt ist.

14. Vorrichtung nach einem der vorhergehenden Ansprüche, ferner umfassend eine der Beschichtereinrichtung, insbesondere jeweiligen zuordenbare oder zugeordnete Bevorratungseinrichtung zur Bevorratung von Baumaterial, welche derart mit der Beschichtungseinrichtung, insbesondere jeweiligen verbindbar oder verbunden ist, dass über die Bevorratungseinrichtung diskontinuierlich oder kontinuierlich eine bestimmte Menge an Baumaterial zuführbar ist.

15. Vorrichtung zur additiven Herstellung eines dreidimensionalen Objekts durch sukzessive schichtweise selektive Belichtung und damit einhergehende selektive Verfestigung von in einer Bauebene (10) ausgebildeten Baumaterialschichten (9) aus verfestigbarem Baumaterial (2) vermittels wenigstens eines Energiestahls (3), wobei die Vorrichtung (1) umfasst:
- eine Gehäusestruktur (4);
- eine kombinierte Beschichtungs- und Belichtungsbaugruppe (6), welche an der Gehäusestruktur (4) der Vorrichtung (1) angeordnet oder ausgebildet ist, wobei die kombinierte Beschichtungs- und Belichtungsbaugruppe (6) umfasst:
eine Beschichtungseinrichtung (8), die zur Aufbringung von Baumaterial (2) in die Bauebene (10) und zur Ausbildung zu verfestigender Baumaterialschichten (9) in der Bauebene (10) eingerichtet ist,
eine Belichtungseinrichtung (11), die zur selektiven Belichtung jeweiliger vermittels der Beschichtungseinrichtung (8) in der Bauebene (10) ausgebildeter Baumaterialschichten (9) eingerichtet ist, wobei die Belichtungseinrichtung (11) mehrere, insbesondere zu mehreren Gruppen zusammengefasste,
Belichtungselemente (13, 13a, 13b), welche jeweils zur Erzeugung eines Energiestrahls (3) zur selektiven Belichtung einer selektiv zu verfestigenden Baumaterialschicht (9) eingerichtet sind, umfasst, wobei
die Beschichtungseinrichtung (8) zwischen einer ersten Anzahl an Belichtungselementen (13, 13a, 13b), insbesondere einer ersten Gruppe mehrerer Belichtungselemente (13, 13a, 13b), und einer zweiten Anzahl an Belichtungselementen (13, 13a, 13b), insbesondere einer zweiten Gruppe mehrerer Belichtungselemente (13, 13a, 13b), angeordnet oder ausgebildet ist;
eine Trägereinrichtung (15), welche wenigstens ein die Bauebene (10) umfassendes, in einer horizontal ausgerichteten Bewegungsebene relativ zu der kombinierten Beschichtungs- und Belichtungsbaugruppe (6) bewegbar gelagertes Trägerelement (16) umfasst.
**BEZUGSZEICHENLISTE**
1 Vorrichtung
2 Baumaterial
3 Energiestrahl
4 Gehäusestruktur
5 Prozesskammer
6 Baugruppe
8 Beschichtungseinrichtung
9 Baumaterialschicht
10 Bauebene
11 Belichtungseinrichtung
12 Beschichtungselement
13 Belichtungselement
14 Aufnahmestruktur
14a - i Aufnahmeabteil
15 Trägereinrichtung
16 Trägerelement
17 Bevorratungseinrichtung
18 Antriebseinrichtung
19 modulartige Gehäusestruktur
20 Führungseinrichtung
21 Absaugeinrichtung
22 Glättungs- und/oder Ebnungseinrichtung
23 Erfassungseinrichtung
24 Absaugelement
25 Glättungs- und/oder Ebnungselement
26 Erfassungselement
27 Aufbringungselement
P1 - P3 Pfeil
